# EUROPEAN PATENT SPECIFICATION

(11) **EP 4 191 909 B1**
(45) Date of publication and mention of the grant of the patent: **21.01.2026**
(21) Application number: 20951922.2
(22) Date of filing: 02.09.2020
(51) Int. Cl.: H04W 28/06, H04L 69/04, H04L 12/46, H04L 69/22

(54) **DATA TRANSMISSION METHOD AND DEVICE THEREFOR**
DATENÜBERTRAGUNGSVERFAHREN UND VORRICHTUNG DAFÜR
PROCÉDÉ DE TRANSMISSION DE DONNÉES ET DISPOSITIF ASSOCIÉ

(43) Date of publication of application: 07.06.2023
(73) Proprietor: Huawei Technologies Co., Ltd., Shenzhen, Guangdong 518129 (CN)
(72) Inventor: YU, Fang, Shenzhen, Guangdong 518129 (CN); YU, Feng, Shenzhen, Guangdong 518129 (CN); LI, Yan, Shenzhen, Guangdong 518129 (CN); NI, Hui, Shenzhen, Guangdong 518129 (CN); CHEN, Zhongping, Shenzhen, Guangdong 518129 (CN)
(74) Representative: MERH-IP Matias Erny Reichl Hoffmann Patentanwälte PartG mbB
(86) International application number: PCT/CN2020/113070
(87) International publication number: WO 2022/047675

(56) References cited:
- CN-A- 108 242 969
- CN-A- 110 381 071
- CN-A- 110 943 917
- CN-A- 111 541 521
- JP-A- 2009 212 686
- US-A1- 2019 288 783
- "3rd Generation Partnership Project; Technical Specification Group Services and System Aspects; System architecture for the 5G System (5GS); Stage 2 (Release 16)", 9 July 2020 (2020-07-09), XP051907983, Retrieved from the Internet <URL:https://ftp.3gpp.org/3guInternal/3GPP_ultimate_versions_to_be_transposed/sentToDpc/23501-g50.zip 23501-g50.docx> [retrieved on 20200709]

## Description

### TECHNICAL FIELD

This application relates to the communication field, and in particular, to a data transmission method and a device therefor.

### BACKGROUND

To satisfy requirements of carrier-sense multiple access with collision detection (Carrier Sense Multiple Access with Collision Detection, CSMA/CD) for collision detection and a backoff retransmission mechanism, CSMA/CD limits a minimum size of an Ethernet packet. for example, to 64 bytes. A frame whose length is less than 64 bytes is considered by a forwarding device on a network as an invalid frame that is abnormally terminated due to a collision.

In the field of industrial applications, a payload of an application layer packet of an industrial application is usually small, for example, 10 bytes or 20 bytes. To meet a limitation of the industrial Ethernet on a minimum Ethernet frame size, a padding redundant field needs to be added to a payload part of a packet, so that a size of the packet is greater than or equal to 64 bytes.

However, in a packet transmission process, because a padding redundant part is added, excessive air interface resources are occupied during air interface transmission, which is not conducive to improving an air interface capacity.

US 2019/0288783 A1 discloses a transmission rate adjustment method, the method including obtaining, by a network device, a target data stream, where the target data stream includes a first data packet, and where the first data packet includes at least two non-idle units, and inserting or deleting a padding unit between two non-idle units of the at least two non-idle units, in response to bandwidth adjustment needing to be performed, and according to a value of the bandwidth adjustment that needs to be performed, where the padding unit provides adaption to a difference between a bandwidth of an upstream transmission channel of the network device and a bandwidth of a downstream transmission channel of the network device.

"3rd Generation Partnership Project; Technical Specification Group Services and System Aspects; System architecture for the 5G System (5GS); Stage 2 (Release 16)", 3GPP Draft TS 23.501 V16.5.0 (2020-07) discusses link MTU (maximum transmission unit) size provisioning.

### SUMMARY

Embodiments of this application provide a data transmission method and a device therefor, to delete padding redundant data from a packet during Ethernet packet transmission, so that the padding redundant data does not need to be transmitted during air interface transmission, thereby saving air interface resources and improving an air interface capacity.

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention.

A first aspect of embodiments of this application provides a data transmission method.

A first device receives a first packet. Load data in the first packet includes padding redundant data. The first device deletes the padding redundant data. The first device generates a second packet. Load data in the second packet is payload data obtained after the padding redundant data is deleted from the first packet. The first device sends the second packet to a second device.

In embodiments of this application, the first device deletes the padding redundant data from the received first packet to obtain the second packet, and sends the second packet to the second device. In this way, in subsequent air interface transmission, the padding redundant data does not need to be transmitted, thereby saving air interface resources and improving an air interface capacity.

Based on the method according to the first aspect of embodiments of this application, in a possible implementation, that the first device receives the first indication information and the first device deletes the padding redundant data includes: The first device deletes the padding redundant data based on the first indication information.

In embodiments of this application, the padding redundant data is deleted by using the received indication information, thereby improving execution efficiency of the first device and ensuring normal transmission of the payload data.

Based on the method according to the first aspect of embodiments of this application, in a possible implementation, the first indication information indicates the first network device to delete the padding redundant data, or the first indication information includes length information of the padding redundant data or location information of the padding redundant data, or the first indication information includes length information of payload data of the first downlink packet or location information of payload data of the first packet.

In embodiments of this application, content that the first indication information specifically indicates is described, thereby improving flexibility of the solution.

Based on the method according to the first aspect of embodiments of this application, in a possible implementation, that the first device deletes the padding redundant data includes: The first device deletes the padding redundant data based on a length field of the first packet.

In embodiments of this application, the padding redundant data is deleted by using the length field of the first packet, thereby improving flexibility of deleting the padding redundant data by the first device.

Based on the method in the first aspect of embodiments of this application, in a possible implementation, the first device is a user plane network element UPF, the second device is a radio access network device RAN, and the first packet is a downlink Ethernet packet.

In embodiments of this application, specific implementations of the first device and the second device are described, thereby improving implementability of the solution.

Based on the method in the first aspect of embodiments of this application, in a possible implementation, that the first device generates the second packet includes:
the first device encapsulates a third packet according to an N3 tunneling protocol to obtain a fourth packet, where the third packet is a packet obtained after the padding redundant data is deleted from the first packet; and adds, if a data length of the fourth packet is less than a minimum Ethernet frame length, tunneling protocol padding redundant data to an N3 tunneling protocol header of the fourth packet to obtain the second packet, where a data length of the second packet is greater than or equal to the minimum Ethernet frame length; or
the first device encapsulates, if the first device determines that a data length of an encapsulated packet obtained by the first device by encapsulating a third packet according to an N3 tunneling protocol is less than a minimum Ethernet frame length, the third packet according to the N3 tunneling protocol to obtain the encapsulated packet, and adds tunneling protocol padding redundant data to an N3 tunneling protocol header of the encapsulated packet to obtain the second packet, where a data length of the second packet is greater than or equal to the minimum Ethernet frame length, and the third packet is a packet obtained after the padding redundant data is deleted from the first packet.

In embodiments of this application, the tunneling protocol padding redundant data is added to the N3 tunneling protocol header of the fourth packet to obtain the second packet, so that a data length of the second packet is greater than or equal to a minimum Ethernet frame length. In this way, an error risk is reduced in an Ethernet transmission process.

Based on the method in the first aspect of embodiments of this application, in a possible implementation, the first device is a radio access network device RAN, the second device is user equipment UE, and the first packet is a downlink packet.

In embodiments of this application, specific implementations of the first device and the second device are described, thereby improving implementability of the solution.

Based on the method in the first aspect of embodiments of this application, in a possible implementation, the first device is user equipment UE, the second device is a radio access network device RAN, and the first packet is an uplink Ethernet packet.

In embodiments of this application, specific implementations of the first device and the second device are described, thereby improving implementability of the solution.

Based on the method in the first aspect of embodiments of this application, in a possible implementation, the first device is a session management network element SMF, the second device is user equipment UE, and the first packet is a downlink Ethernet packet.

In embodiments of this application, specific implementations of the first device and the second device are described, thereby improving implementability of the solution.

Based on the method in the first aspect of embodiments of this application, in a possible implementation, the first device is user equipment UE, the second device is a session management network element SMF, and the first packet is an uplink Ethernet packet.

In embodiments of this application, specific implementations of the first device and the second device are described, thereby improving implementability of the solution.

A second aspect of embodiments of this application provides a data transmission method.

A third device sends first indication information to a fourth device. The first indication information is for deleting padding redundant data from a first packet, or the first indication information is for adding padding redundant data to a first packet, and the first indication information includes length information of the padding redundant data or location information of the padding redundant data, or the first indication information includes length information of payload data of the first packet or location information of payload data of the first packet.

In embodiments of this application, the first indication information is sent to the fourth device, to indicate to delete the padding redundant data from the first packet, so that the padding redundant data does not need to be transmitted during subsequent air interface transmission. thereby saving air interface resources and improving an air interface capacity.

Based on the method according to the second aspect of embodiments of this application, in a possible implementation, when the first indication information is for deleting the padding redundant data from the first packet,
the third device is a policy control network element PCF, the fourth device is a session management network element SMF, and the first packet is an Ethernet packet; or
the third device is a session management network element SMF, the fourth device is a user plane network element UPF, and the first packet is an Ethernet packet; or
the third device is a session management network element SMF, the fourth device is user equipment UE, and the first packet is an Ethernet packet; or
the third device is a session management network element SMF, and the fourth device is a radio access network device RAN; or
the third device is a radio access network device RAN, and the fourth device is user equipment UE.

In embodiments of this application, specific implementations of the third device and the fourth device are described, thereby improving implementability of the solution.

Based on the method according to the second aspect of embodiments of this application, in a possible implementation, when the first indication information is for adding padding redundant data to the first packet,
the third device is an SMF, the fourth device is a UPF, and the first packet is an Ethernet packet; or
the third device is an SMF, the fourth device is UE, and the first packet is an Ethernet packet; or
the third device is an SMF, and the fourth device is a RAN.

In embodiments of this application, specific implementations of the third device and the fourth device are described, thereby improving implementability of the solution.

Based on the method according to the second aspect of embodiments of this application, in a possible implementation, the third device is a policy control network element PCF, the fourth device is a session management network element SMF, and a fifth device is an application function network element AF. Before the third device sends the first indication information to the fourth device, the third device receives second indication information from the fifth device, and the third device determines the first indication information based on the second indication information. The second indication information indicates length information of the padding redundant data or location information of the padding redundant data, or the second indication information indicates length information of payload data of the first packet or location information of payload data of the first packet; and

In embodiments of this application, the first indication information is determined by using the second indication information sent by the AF. To be specific, based on information about the padding redundant data in the second indication information sent by the AF, information about the padding redundant data in the first indication information is further determined, and an addition operation or a deletion operation is determined to be performed on the padding redundant data, thereby improving implementability of the solution.

A third aspect of embodiments of this application provides a device.

A device includes a receiving unit, a deletion unit, a generation unit, and a sending unit.

The receiving unit is configured to receive a first packet, where load data in the first packet includes padding redundant data.

The deletion unit is configured to delete the padding redundant data.

The generation unit is configured to generate a second packet, where load data in the second packet is payload data obtained after the padding redundant data is deleted from the first packet.

The sending unit is configured to send the second packet to a second device.

Optionally, the receiving unit is further configured to receive first indication information.

The deletion unit is further configured to delete the padding redundant data based on the first indication information.

Optionally, the first indication information indicates to delete the padding redundant data, or the first indication information includes length information of the padding redundant data or location information of the padding redundant data, or the first indication information includes length information of payload data of the first downlink packet or location information of payload data of the first packet.

Optionally, the deletion unit is further configured to delete the padding redundant data based on a length field of the first packet.

Optionally, the device is a UPF, the second device is a RAN, and the first packet is a downlink Ethernet packet.

Optionally, the generation unit is further configured to encapsulate a third packet according to an N3 tunneling protocol to obtain a fourth packet, where the third packet is a packet obtained after the padding redundant data is deleted from the first packet; and add, if a data length of the fourth packet is less than a minimum Ethernet frame length, tunneling protocol padding redundant data to an N3 tunneling protocol header of the fourth packet to obtain the second packet, where a data length of the second packet is greater than or equal to the minimum Ethernet frame length; or
the generation unit is further configured to encapsulate, if the device determines that a data length of an encapsulated packet obtained by the first device by encapsulating a third packet according to an N3 tunneling protocol is less than a minimum Ethernet frame length, the third packet according to the N3 tunneling protocol to obtain the encapsulated packet, and adds tunneling protocol padding redundant data to an N3 tunneling protocol header of the encapsulated packet to obtain the second packet, where a data length of the second packet is greater than or equal to the minimum Ethernet frame length, and the third packet is a packet obtained after the padding redundant data is deleted from the first packet.

Optionally, the device is a RAN, the second device is UE, and the first packet is a downlink packet.

Optionally, the device is UE, the second device is a RAN, and the first packet is an uplink Ethernet packet.

Optionally, the device is an SMF, the second device is UE, and the first packet is a downlink Ethernet packet.

Optionally, the device is UE, the second device is an SMF, and the first packet is an uplink Ethernet packet.

A method performed by the device provided in the third aspect of embodiments of this application is similar to the method performed by the first device in the first aspect. Details are not described herein again.

A fourth aspect of embodiments of this application provides a device.

A device includes: a sending unit, configured to send first indication information to a fourth device, where the first indication information is for deleting padding redundant data of a first packet, or the first indication information is for adding padding redundant data to the first packet, and the first indication information includes length information of padding redundant data, or location information of padding redundant data, or the first indication information includes length information of payload data of the first packet, or location information of payload data of the first packet.

Optionally, when the first indication information is for deleting the padding redundant data from the first packet,
the device is a PCF, the fourth device is an SMF, and the first packet is an Ethernet packet; or
the device is an SMF, the fourth device is a UPF, and the first packet is an Ethernet packet; or
the device is an SMF, the fourth device is UE, and the first packet is an Ethernet packet; or
the device is an SMF, and the fourth device is a RAN; or
the device is a RAN, and the fourth device is UE.

Optionally, when the first indication information is for adding padding redundant data to the first packet,
the device is an SMF, the fourth device is a UPF, and the first packet is an Ethernet packet; or
the device is an SMF, the fourth device is UE, and the first packet is an Ethernet packet; or
the device is an SMF, and the fourth device is a RAN.

Optionally, the device is a policy control network element PCF, the fourth device is a session management network element SMF, and a fifth device is an application function network element AF. The device further includes a receiving unit and a determining unit.

The receiving unit is configured to receive second indication information from a fifth device, where the second indication information indicates length information of the padding redundant data or location information of the padding redundant data, or the second indication information indicates length information of payload data of the first packet or location information of payload data of the first packet.

The determining unit is configured to determine the first indication information based on the second indication information.

A method performed by the device provided in the fourth aspect of embodiments of this application is similar to the method performed by the third device in the second aspect. Details are not described herein again.

A fifth aspect of embodiments of this application provides a network device or user equipment, including:
a processor, a memory, and an input/output interface. The processor and the memory are connected to the input/output interface. The memory is configured to store program code. When invoking the program code in the memory, the processor performs the method according to the implementations of the first aspect or the second aspect of this application.

A sixth aspect of embodiments of this application provides a storage medium. It should be noted that, a technical solution of the present invention essentially, or a part contributing to the prior art, or all or a part of the technical solution may be implemented in the form of a software product. The computer software product is stored in a storage medium, and is configured to store computer software instructions used by the foregoing device. The computer software instructions include a program designed for performing the data transmission method in the first aspect or the second aspect.

The storage medium includes various media that may store program code, such as a USB flash drive, a removable hard disk, a read-only memory (ROM for short, English full name: Read-Only Memory), a random access memory (RAM for short, English full name: Random Access Memory), a magnetic disk, or an optical disc.

A seventh aspect of embodiments of this application provides a computer program product including instructions. The computer program product, when run on a computer, enables the computer to perform the method according to the foregoing first aspect or the second aspect of this application.

The processor mentioned in any one of the foregoing may be a general-purpose central processing unit (Central Processing Unit, CPU), a microprocessor, an application-specific integrated circuit (application-specific integrated circuit, ASIC), or one or more integrated circuits configured to control program execution of the data transmission method in the first aspect or the second aspect.

In the technical solutions provided in embodiments of this application, the first device deletes the padding redundant data from the received first packet to obtain the second packet, and sends the second packet to the second device. In this way, in subsequent air interface transmission, the padding redundant data does not need to be transmitted, thereby saving air interface resources and improving an air interface capacity.

### BRIEF DESCRIPTION OF DRAWINGS

FIG. 1 is a schematic diagram of a communication network architecture according to an embodiment of this application;
FIG. 2 is a schematic flowchart of a data transmission method according to an embodiment of this application;
FIG. 3 is another schematic flowchart of a data transmission method according to an embodiment of this application;
FIG. 4 is another schematic flowchart of a data transmission method according to an embodiment of this application;
FIG. 5 is another schematic flowchart of a data transmission method according to an embodiment of this application;
FIG. 6 is another schematic flowchart of a data transmission method according to an embodiment of this application;
FIG. 7 is a schematic diagram of a structure of a packet in a data transmission method according to an embodiment of this application;
FIG. 8 is a schematic diagram of another structure of a packet in a data transmission method according to an embodiment of this application;
FIG. 9 is a schematic diagram of a structure of a packet in a data transmission method according to an embodiment of this application;
FIG. 10 is a schematic diagram of a structure of a packet in a data transmission method according to an embodiment of this application;
FIG. 11 is a schematic diagram of a structure of a packet in a data transmission method according to an embodiment of this application;
FIG. 12 is a schematic diagram of a structure of a packet in a data transmission method according to an embodiment of this application;
FIG. 13 is a schematic diagram of a structure of a device according to an embodiment of this application;
FIG. 14 is a schematic diagram of a structure of a device according to an embodiment of this application;
FIG. 15 is a schematic diagram of another structure of a device according to an embodiment of this application;
FIG. 16 is a schematic diagram of another structure of a device according to an embodiment of this application; and
FIG. 17 is a schematic diagram of another structure of a device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of this application.

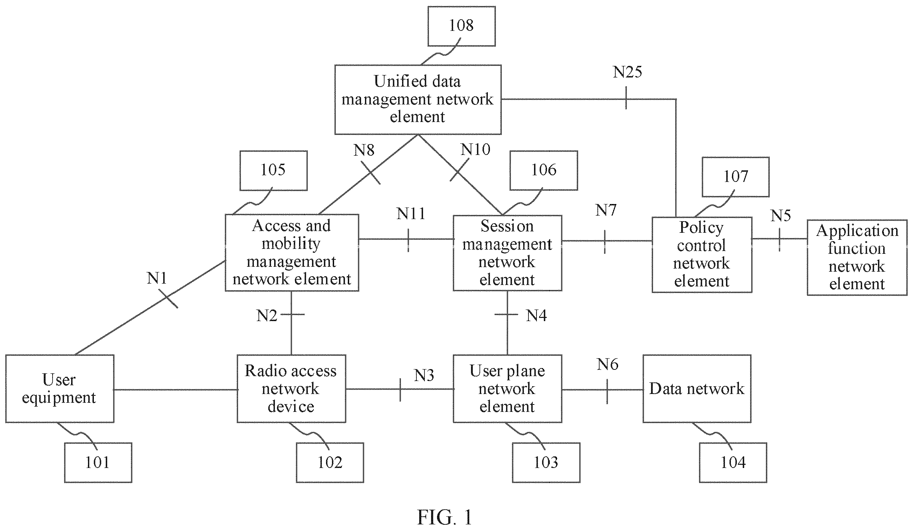

FIG. 1 is a schematic diagram of a communication network architecture according to an embodiment of this application.

As shown in FIG. 1, the communication network architecture includes user equipment (User Equipment, UE) 101, a radio access network (radio access network, RAN) 102, a user plane network element (user plane function, UPF) 103, a data network (data network, DN) 104, an access and mobility management network element (access and mobility management function, AMF) 105, a session management network element (session management function, SMF) 106, a policy control network element (policy control function, PCF) 107, an application function (application function, AF) network element, and a unified data management network element (unified data management, UDM) 108. The UE 101 communicates with the AMF 105 through an N1 interface. The UE 101 is connected to the RAN 102. The RAN 102 is connected to the AMF 105 by an N2 interface. The RAN 102 is connected to the UPF 103 by an N3 interface. The UPF 103 is connected to the DN 104 by an N6 interface. The UPF 103 is connected to the SMF 106 by an N4 interface. The PCF 107 is connected to the AF by an N5 interface. The SMF 106 is connected to the PCF 107 by an N7 interface. The AMF 105 is connected to the SMF 106 by an N11 interface. The AMF 105 is connected to the UDM 108 by an N8 interface. The SMF 106 is connected to the UDM 108 by an N10 interface. The UDM 108 is connected to the PCF 107 by an N25 interface. It may be understood that the communication network architecture provided in this application is merely an example. In an actual application process, there may be one or more network units or user equipments, and a connection manner is not limited thereto. This is not specifically limited herein.

In embodiments of this application, the UE refers to a network terminal device such as a mobile phone or an Internet of Things terminal device.

The RAN is a device providing wireless access for a terminal device, and includes, but is not limited to, an eNodeB, a Wi-Fi AP, a WiMAX BS, or the like.

The AMF is mainly responsible for mobility management in the mobile network, such as user location update, registration of a user with a network, and user switching.

The SMF is mainly responsible for session management in the mobile network, such as session establishment, modification, and release. For example, specific functions are allocation of an IP address to a user and selection of a UPF that provides a packet forwarding function.

The PCF is responsible for providing policies, such as a quality of service (Quality of Service, QoS) policy and a slice selection policy, for the AMF or the SMF.

The UDM stores subscriber data such as subscription information and authentication or authorization information.

The AF is responsible for providing services for example, affecting service routing and interacting with the PCF to perform policy control, for the 3GPP network.

The UPF is mainly responsible for processing a user packet, such as forwarding and charging.

The DN refers to an operator network that provides data transmission services, such as an IP multi-media service (IP Multi-media Service) and the Internet (Internet), for users.

In addition to the network elements in FIG. 1, the communication network architecture further includes a network exposure function (network exposure function, NEF) network element. The network exposure function (network exposure function, NEF) network element is a network element that exposes a capability of a communication system to a third party, an application function AF, and the like, and transfers information between the third party, an application server, and the communication system.

The following describes in detail a data transmission method and an apparatus therefor provided in embodiments of this application with reference to the communication system framework shown in FIG. 1.

In embodiments of this application, based on different transmission protocols and usage scenarios, the data processing method provided in embodiments of this application includes a plurality of implementations. The following separately describes a plurality of cases.

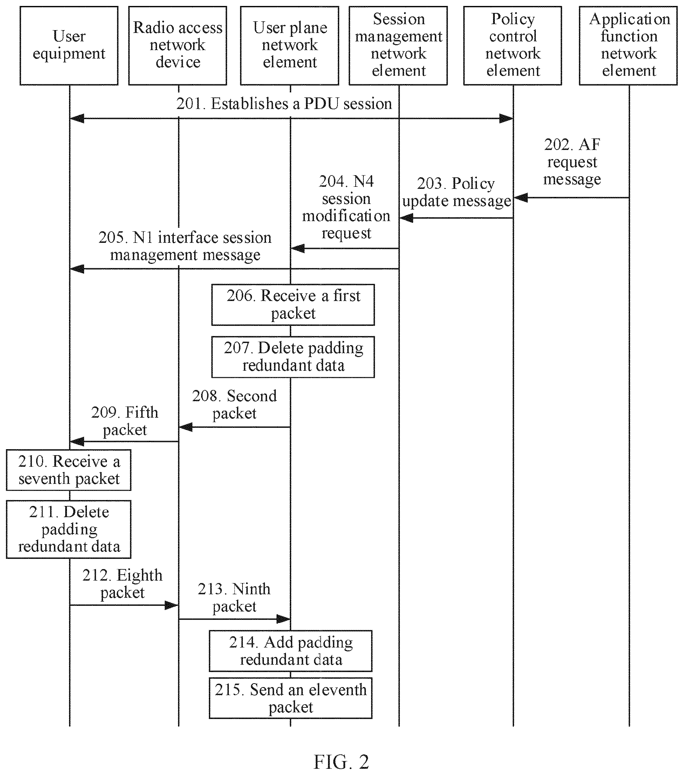

FIG. 2 is a schematic flowchart of a data transmission method according to an embodiment of this application.

In step 201, user equipment establishes a protocol data unit (Protocol Data Unit, PDU) session.

The PDU session is for transmitting user plane data between the UE and an application server.

Through step 201, an N3 tunnel is established between an NG-RAN and a UPF for the PDU session. The N3 tunnel refers to a tunnel between the UPF and the RAN. It should be noted that this embodiment may be applied to a scenario in which a 5G system interworks with an industrial network, or may be applied to another network scenario. This is not specifically limited herein. In a scenario in which the 5G system interworks with an industrial network, the application server may be a production line controller or another industrial node in the industrial network.

In step 202, the application function network element sends an AF request message to a policy control network element.

When the application function network element needs to provide some service-related information to a core network, the application function network element sends an AF request (AF request) message to the policy control network element. For example, after the PDU session between the user equipment and the application server is established, the application server triggers the application function network element to send the application function network element request message, where the application function network element is a control plane network element of the application server. The AF request message carries service description information and second indication information. The second indication information indicates information related to padding redundant data of a packet of a service described by the service description information.

Specifically, in a possible implementation, the second indication information may indicate length information of the padding redundant data. Specifically, the length information of the padding redundant data may be a length of padding redundant data (padding) in a load (payload) field of the packet.

Specifically, in a possible implementation, the second indication information may further indicate location information of the padding redundant data. Specifically, the location information of the padding redundant data may be a start location and an end location of the padding redundant data in the payload field of the packet.

Specifically, in a possible implementation, the second indication information may further indicate length information of payload data of the packet. Specifically, the length information of the payload data of the packet may be a length of payload data in the payload field of the packet.

Specifically, in a possible implementation, the second indication information may further indicate location information of payload data of the packet. Specifically, the location information of the payload data of the packet may be a start location and an end location of payload data in a payload field of the packet.

It should be noted that, in an actual application process, the second indication information may include one or more of length information of the padding redundant data, location information of the padding redundant data, length information of payload data, or location information of payload data of the packet.

Specifically, in a possible implementation, the padding redundant data is added by an Ethernet packet transmit end at a media access control (Media Access Control, MAC) layer.

Specifically, in another possible implementation, the padding redundant data is added by the Ethernet packet transmit end at a higher layer. The higher layer is a protocol layer above the MAC layer, for example, an application layer.

The service description information includes (a data network name, Data Network Name, DNN), an application identifier, or traffic filtering information (traffic filtering information). The service description information indicates an application corresponding to the second indication information. For example, if the service description information includes a DNN, the second indication information is applicable to service packets of all applications of the DNN; if the service description information includes an application identifier, the second indication information is applicable to a packet of an application corresponding to the application identifier; or if the service description information includes traffic filtering information, the second indication information is applicable to a packet corresponding to the traffic filtering information. The traffic filtering information is Ethernet packet filtering information, and may specifically include at least one of a source MAC address, a destination MAC address, a VLAN identifier, or the like of the service packet.

In an actual application process, the AF request message may be directly sent to the policy control network element, or may be first sent to a NEF, and then forwarded by the NEF to the policy control network element. This is not specifically limited herein.

In step 203, the policy control network element sends a policy update message to a session management network element.

After the policy control network element receives the AF request message sent by the session management network element, the policy control network element obtains the second indication information and a service data flow (Service Data Flow, SDF) template in the AF request message, generates first indication information based on the second indication information, adds the first indication information and the SDF template to the policy update message, and sends the policy update message to the session management network element. The SDF template includes an application identifier or traffic filtering information received by the policy control network element in step 202, or application identifiers of one or more applications corresponding to the DN received in step 202 or one or more pieces of traffic filtering information corresponding to the DN received in step 202. The first indication information is for deleting or adding padding redundant data of a packet of a service described by the SDF template.

Specifically, in a possible implementation, the policy update message includes a PCC rule, and the PCC rule further includes a first indication information and an SDF template.

Specifically, in a possible implementation, the first indication information may further indicate length information of padding redundant data of first padding redundant data. Specifically, the length information of the padding redundant data of the first padding redundant data may be a length of padding redundant data (padding) in a load (payload) field of the packet.

Specifically, in a possible implementation, the first indication information may further indicate location information of padding redundant data of first padding redundant data. Specifically, the location information of the padding redundant data of the first padding redundant data may be a start location and an end location of padding redundant data in a payload field of the packet.

Specifically, in a possible implementation, the first indication information may further indicate length information of payload data of the packet. Specifically, the length information of the payload data of the packet may be a length of payload data in the payload field of the packet.

Specifically, in a possible implementation, the first indication information may further indicate location information of payload data of the packet. Specifically, the location information of the payload data of the packet may be a start location and an end location of payload data in a payload field of the packet.

It should be noted that, in an actual application process, the first indication information may include one or more of the length information of the padding redundant data, the location information of the padding redundant data, the length information of the payload data, or the location information of the payload data. When the first indication information includes one or more of the foregoing information, the device receiving the first indication information may add or delete the padding redundant data based on the first indication information. Alternatively, in a possible implementation, the first indication information may further include an indication for to-be-added or to-be-deleted padding redundant data. The indication indicates a device receiving the first indication information to add or delete the padding redundant data based on the first indication information when the device receives a service packet. Alternatively, in a possible implementation, if the first indication information includes only an indication for to-be-added or to-be-deleted padding redundant data, a device receiving the first indication information adds or deletes the padding redundant data based on the first indication information when the device receives a service packet.

After the session management network element SMF receives the policy update message, the SMF performs session management based on the policy update message.

Specifically, the SMF binds a policy and charging control (Policy and Charging Control, PCC) rule obtained from the policy update message to an existing QoS flow (QoS Flow), or generates a new QoS flow based on a QoS parameter derived from a parameter in a PCC rule, and then binds the PCC rule to the QoS flow. The PCC rule includes the first indication information and the SDF template. Binding the PCC rule to the QoS flow may be understood as applying the PCC rule to the QoS flow, that is, binding one or more service flows corresponding to the SDF template in the PCC rule to the QoS flow. If a plurality of service flows are bound to a same QoS flow, the service flows have a same QoS requirement, and the first indication information includes same length information of padding redundant data.

In step 204, the session management network element sends an N4 session modification request to the user plane network element.

The session management network element SMF obtains the first indication information and the SDF template in the policy update message, and generates a data packet detection rule (Packet Detection Rule, PDR) and a forwarding action rule (Forwarding Action Rule, FAR) based on the PCC rule in the policy update message, where the PDR includes the SDF template. The SDF template may also be replaced by an application identifier and a packet filter set (Packet Filter Set), and the packet filter set includes traffic filtering information in the SDF template. In a possible implementation, the FAR includes the first indication information. The SMF sends the PDR and the FAR to the user plane network element UPF by using the N4 session modification request message. The UPF uses the PDR to detect a received data packet. When the received data packet matches the traffic filtering information, the UPF performs a corresponding packet forwarding action based on the first indication information in the FAR, for example, deleting padding redundant data or adding padding redundant data. In a possible implementation, when a service corresponding to a packet filter in the SDF template is a downlink service, the first indication information included in the FAR includes an indication for deleting padding redundant data; or when a service corresponding to a packet filter in the SDF template is an uplink service, the first indication information included in the FAR includes an indication for adding padding redundant data.

In step 205, the session management network element sends an N1 interface session management message to the user equipment.

The session management network element obtains the first indication information and the SDF template in the policy update message, and generates a QoS rule (QoS Rule) based on the PCC rule in the policy update message. The QoS rule includes a QoS flow identifier, and further includes the first indication information and a packet filter set (Packet Filter Set) corresponding to the QoS flow identifier. The SMF sends the QoS rule to the user equipment UE based on the N1 interface session management information. Optionally, the first indication information may not be included in the QoS rule. In other words, the session management network element sends the first indication information and the corresponding QoS flow identifier to the user equipment by using the N1 interface session management message, to indicate to the user equipment that the first indication information is for the QoS flow identified by the QoS flow identifier.

It should be noted that the N1 interface session management message herein is sent by the SMF to the radio access network device through the AMF, and then sent to the user equipment through the radio access network device. The N1 interface session management message specifically carries a PDU session modification command. In other words, the N1 interface session management message includes a PDU session modification command. The PDU session modification command includes the QoS rule. The QoS rule includes the QoS flow identifier and the first indication information. Alternatively, the PDU session modification command includes the QoS flow identifier and the first indication information, and optionally, further includes the QoS rule.

In a possible implementation, when a service corresponding to a packet filter in the packet filter set carried in the QoS rule is an uplink service, the first indication information includes an indication for deleting padding redundant data; or when a service corresponding to a packet filter in the packet filter set carried in the QoS rule is a downlink service, the first indication information includes an indication for adding padding redundant data.

A sequence of performing step 204 and step 205 is not limited. The SMF may initiate a PDU session modification procedure after step 203. In the PDU session modification procedure, step 205 is first performed, and then step 204 is performed; or step 204 may be first performed, and then step 205 is performed; or step 204 and step 205 may be performed at the same time. This is not specifically limited herein.

It should be noted that the first indication information included in step 204 and step 205 may be different. For example, the first indication information in step 204 indicates to delete padding redundant data, and the first indication information in step 205 indicates to add padding redundant data; or the first indication information in step 204 indicates to add padding redundant data, and the first indication information in step 205 indicates to delete padding redundant data.

In step 206, the user plane network element receives a first packet.

The first packet is an Ethernet packet. During downlink data transmission, the user plane network element receives one or more downlink first packets, and the one or more first packets correspond to one QoS flow identifier.

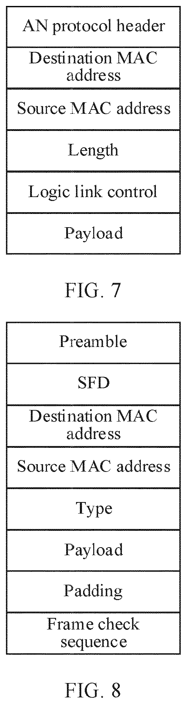

Specifically, in a possible implementation, the first packet is in an Ethernet II frame format. Specifically, as shown in FIG. 8, the first packet includes a preamble field, a start frame delimiter (Start Frame Delimiter, SFD) field, a destination MAC address field, a source MAC address field, a type field, a data payload field, and a frame check sequence (Frame Check Sequence, FCS) field. The data payload field includes a payload field, and further includes a padding field.

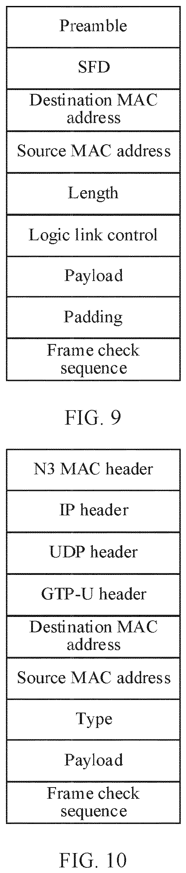

Specifically, in a possible implementation, the first packet is in an Ethernet IEEE 802.3 frame format. Specifically, as shown in FIG. 9, the first packet includes a preamble field, an SFD field, a destination MAC address field, a source MAC address field, a length field, a logical link control (Logic Link Control, LLC) field, a data payload field, and an FCS field. The data payload field includes a payload field, and further includes a padding field.

In step 207, the user plane network element deletes padding redundant data from the first packet.

After receiving the first packet, the user plane network element deletes the padding redundant data from the first packet.

Specifically, the user plane network element detects the received first packet, determines, based on the PDR received in step 204, that the first packet matches the PDR received in step 204, and deletes the padding redundant data based on the first indication information in the FAR received in step 204.

Specifically, when the first packet is in the Ethernet II frame format, the user plane network element deletes the padding redundant data from the first packet based on the first indication information.

Specifically, when the first indication information includes length information of the padding redundant data, the user plane network element deletes the padding redundant data from a payload part of the first packet based on the length information of the padding redundant data. For example, the user plane network element may determine an end location of the padding redundant data based on a frame format in FIG. 8 or FIG. 9, and then determine a start location of the padding redundant data based on a length of the padding redundant data included in the first indication information, to delete the padding redundant data based on the start location and the end location.

Alternatively, when the first indication information includes location information of the padding redundant data, the user plane network element finds a start location and an end location of the padding redundant data from the payload part of the first packet based on the location information of the padding redundant data, and deletes data from the start location to the end location.

Alternatively, when the first indication information includes length information of the payload data, the user plane network element deletes data other than the payload data from the payload part of the first packet based on the length information of the payload data, that is, deletes the padding redundant data. For example, the user plane network element may determine an end location of the padding redundant data based on a frame format in FIG. 8 or FIG. 9, and then determine a start location of the padding redundant data based on a length of the padding redundant data included in the first indication information, to delete the padding redundant data based on the start location and the end location.

Alternatively, when the first indication information includes location information of the payload data, the user plane network element finds a start location and an end location of the payload data from the payload part of the first packet based on the location information of the payload data, and deletes data outside the start location to the end location of the payload data, that is, deletes the padding redundant data.

Specifically, when the first packet is in the Ethernet IEEE 802.3 frame format, the user plane network element may determine a location of the padding redundant data in the first packet based on the first indication information, or determine a location of the padding redundant data in the first packet based on a length (Length) field shown in FIG. 9, and further delete the padding redundant data from the first packet based on the location of the padding redundant data in the first packet. Specifically, data other than the payload data corresponding to the length field is deleted from the payload part of the first packet based on the length field, that is, the padding redundant data is deleted.

It should be noted that, in an actual application process, the first indication information may include only one or more of the length information of the padding redundant data, the location information of the padding redundant data, the length information of the payload data, or the location information of the payload data. When the first indication information includes one or more of the foregoing information, the user plane network element may delete the padding redundant data based on the first indication information. Alternatively, in a possible implementation, the first indication information may further include an indication for to-be-deleted padding redundant data, and the indication indicates the user plane network element to delete the padding redundant data based on the first indication information. Alternatively, in a possible implementation, if the first indication information includes only an indication for to-be-deleted padding redundant data, the user plane network element deletes the padding redundant data based on the first indication information.

In step 208, the user plane network element generates a second packet, and sends the second packet to a radio access network device.

After the user plane network element deletes the padding redundant data from the first packet, the user plane network element generates a second packet, where load data in the second packet is payload data obtained after the padding redundant data is deleted from the first packet, and sends the second packet to the radio access network device.

Specifically, after deleting the padding redundant data from the first packet, the user plane network element encapsulates, according to an N3 tunneling protocol, the first packet from which the padding redundant data is deleted, to obtain the second packet. Specifically, in a possible implementation, the N3 tunneling protocol herein may be a general packet radio service tunneling protocol user plane (general packet radio service tunneling protocol user plane, GTP-U) protocol. It may be understood that. in an actual application process, the N3 tunneling protocol may be another tunneling protocol. This is not specifically limited herein. Optionally, before the user plane network element encapsulates, according to the N3 tunneling protocol, the first packet from which the padding redundant data is deleted, to obtain the second packet, the user plane network element further deletes the preamble field, the SFD field, and the FCS field from the first packet. To be specific, the preamble field, the SFD field, and the FCS field in the first packet are not transmitted between the user plane network element, the radio access network device, and the user equipment.

For example, if a format of the first packet is the Ethernet II frame format shown in FIG. 8, and the first packet includes a padding field, a format of the second packet is shown in FIG. 10, where a destination MAC address field, a source MAC address field, a type field, and a payload field of the second packet are all the same as corresponding fields in the first packet. An N3 tunneling protocol header field includes an N3 MAC header field, an IP header field, a UDP header field, and a GTP-U header field in FIG. 10. The N3 MAC header field refers to a protocol header field of a MAC layer used for transmitting a packet in a layer 2 transmission network between an access network node and the user plane network element. An FSC field in FIG. 10 is different from that in the first packet. The FCS field in FIG. 10 is calculated by the user plane network element based on a valid length of an N3 MAC frame. The valid length of the N3 MAC frame includes the N3 MAC header field, the IP header field, the UDP header field, the GTP-U header field, the destination MAC address field, the source MAC address field, the type field, and the payload field in FIG. 10.

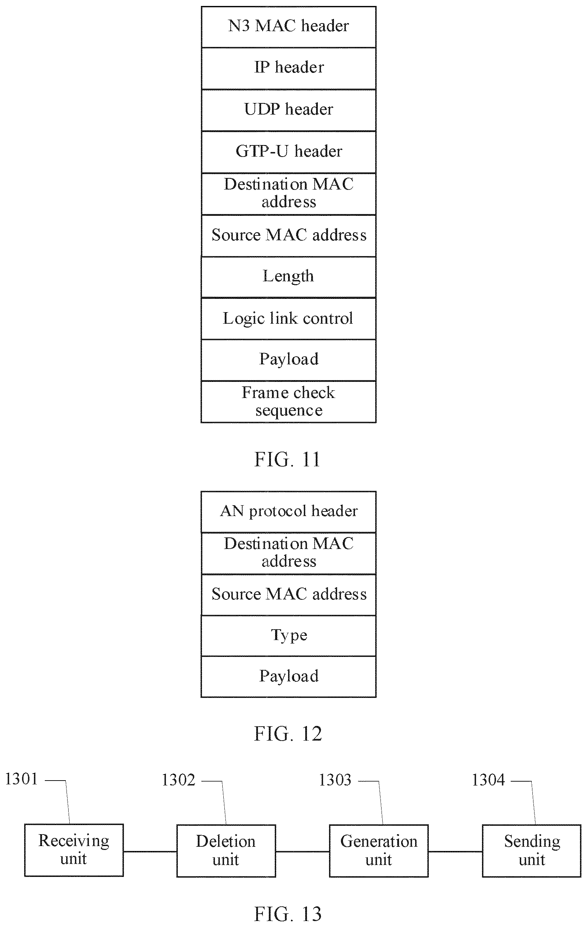

For example, if a format of the first packet is the IEEE 802.3 frame format shown in FIG. 9, a format of the second packet is shown in FIG. 11, where a destination MAC address field, a source MAC address field, a length field, an LLC field, and a payload field of the second packet are all the same as corresponding fields in the first packet. An N3 tunneling protocol header field includes an N3 MAC header field, an IP header field, a UDP header field, and a GTP-U header field in FIG. 11. The N3 MAC header field refers to a protocol header field of a MAC layer used for transmitting a packet in a layer 2 transmission network between an access network node and the user plane network element. An FSC field in FIG. 11 is different from that in the first packet. The FCS field in FIG. 11 is calculated by the user plane network element based on a valid length of an N3 MAC frame. The valid length of the N3 MAC frame includes the N3 MAC header field, the IP header field, the UDP header field, the GTP-U header field, the destination MAC address field, the source MAC address field, the length field, and the payload field in FIG. 11.

It should be noted that in an application scenario of packet transmission, after the user plane network element deletes the padding redundant data from the first packet, a data length of the entire packet may be less than a minimum Ethernet frame length, for example, less than 64 bytes. However, after a protocol header of the N3 tunneling protocol shown in FIG. 10 or FIG. 11 is added, a data length of the second packet is greater than or equal to 64 bytes. Therefore, an Ethernet packet conforming to the protocol needs to meet the requirement of the minimum Ethernet frame length. A data length of the first packet is a sum of lengths of remaining parts that are in the packet format shown in FIG. 8 or FIG. 9 and that do not include the preamble field, the SFD field, and the FCS field, and a data length of the second packet is a sum of lengths of remaining parts that are in the packet format shown in FIG. 10 or FIG. 11 and that do not include the N3 MAC header field and the FCS field.

In an industrial packet scenario, for example, a simpler protocol stack may be used for the N3 tunneling protocol. For example, if UDP, IP, and GTP-U protocol layers shown in FIG. 10 or FIG. 11 are not used for the N3 tunneling protocol, and instead another protocol layer, for example, only the GTP-U layer, is used, the second packet does not include the IP header field and the UDP header field shown in FIG. 10 or FIG. 11, or the second packet does not include the P header field, the UDP header field, and the GTP-U header field shown in FIG. 10 or FIG. 11, and a data length of the second packet may be less than 64 bytes. In this case, there are two manners.

Manner 1: The user plane network element encapsulates the third packet according to the N3 tunneling protocol to obtain a fourth packet; and adds, if a data length of the fourth packet is less than the minimum Ethernet frame length, tunneling protocol padding redundant data to an N3 tunneling protocol header of the fourth packet to generate the second packet, where a data length of the second packet is greater than or equal to the minimum Ethernet frame length.

Manner 2: If the user plane network element determines that a data length of an encapsulated packet obtained by the user plane network element by encapsulating the third packet according to the N3 tunneling protocol is less than the minimum Ethernet frame length, the user plane network element encapsulates the third packet according to the N3 tunneling protocol to obtain the encapsulated packet, and adds tunneling protocol padding redundant data to an N3 tunneling protocol header of the encapsulated packet to generate the second packet, where a data length of the second packet is greater than or equal to the minimum Ethernet frame length.

Optionally, before performing the operations in manner 1 or manner 2, the user plane network element receives third indication information from a session management network element. The third indication information indicates the user plane network element to perform an Ethernet frame length check on a packet to be sent through an N3 tunnel, and add tunneling protocol padding redundant data when an Ethernet frame length of the packet is less than 64 bytes. Specifically, in a step in which the session management network element sends an N4 session modification request to the user plane network element, the third indication information may be carried in the N4 session modification request.

In manner 1 and manner 2, the third packet is a packet obtained after the padding redundant data is deleted from the first packet. It should be noted that, after deleting the padding redundant data from the first packet, the user plane network element may first generate the third packet, and then generate the fourth packet or the second packet based on the generated third packet. Alternatively, a process of generating the third packet may not be included, and an operation is directly performed on the first packet obtained after the padding redundant data is deleted.

It should be noted that the N3 tunneling protocol is a tunneling protocol between the user plane network element and an access network node. In the present invention, the N3 tunneling protocol may be replaced with another tunneling protocol that may be used for data transmission between the user plane network element and the access network node.

In step 209, the radio access network device sends a fifth packet to the user equipment.

After receiving the second packet sent by the user plane network element, the radio access network device removes the N3 tunneling protocol header from the second packet, adds an air interface protocol header, generates a fifth packet, and sends the fifth packet to the user equipment.

For example, if a format of the first packet is the Ethernet II frame format shown in FIG. 8, a format of the fifth packet is shown in FIG. 12. A destination MAC address field, a source MAC address field, a type field, and a payload field of the fifth packet are all the same as corresponding fields in the second packet. An AN protocol header in FIG. 12 is also referred to as an air interface protocol header, and for example, may specifically include a Packet Data Convergence Protocol (packet data convergence protocol, PDCP) header and a radio link control (Radio Link Control, RLC) header, and a MAC header.

If a format of the first packet is the IEEE 802.3 frame format shown in FIG. 9, a format of the fifth packet is shown in FIG. 7. A destination MAC address field, a source MAC address field, a length field, an LLC field, and a payload field of the fifth packet are all the same as corresponding fields in the second packet. An AN protocol header in FIG. 7 is also referred to as an air interface protocol header, and for example, may specifically include a PDCP header, an RLC header, and a MAC header.

It should be noted that a manner in which the radio access network device sends a packet to the user equipment is an air interface transmission manner, and is not limited by the requirement of the minimum Ethernet frame length. Therefore, after the N3 tunneling protocol header is removed from the second packet, a length of the second packet is less than 64 bytes, that is, a length of the fifth packet is less than 64 bytes, and may also be transmitted. In addition, in the previous steps, the padding redundant data has been deleted from the payload part of the first packet, that is, a payload part of the fifth packet does not include the padding redundant data. Therefore, during air interface transmission, air interface resources can be saved.

In a possible implementation, after the user equipment receives the fifth packet, an application layer of the user equipment may directly obtain the payload data part of the fifth packet for use.

Alternatively, in a possible implementation, when the user equipment is an intermediate node of the network and needs to continue to forward an Ethernet frame to a next-hop node, the user equipment supplements a payload part of the fifth packet with padding redundant data, to generate a sixth packet, so that a data length of the sixth packet is greater than or equal to 64 bytes. Optionally, in a possible implementation, before the user plane network element encapsulates, according to the N3 tunneling protocol, the first packet from which the padding redundant data is deleted, to obtain the second packet, if the user plane network element further deletes the preamble field, the SFD field, and the FCS field from the first packet, the user equipment further needs to supplement another field, for example, an FCS field, a preamble field, and an SFD field, to generate the sixth packet. This is not specifically limited herein. A format of the sixth packet may be the same as a format of the first packet. That is, if the first packet is in the Ethernet II frame format shown in FIG. 8, the sixth packet is also an Ethernet frame of the Ethernet II type; or if the first packet is in the IEEE 802.3 frame format shown in FIG. 9, the sixth packet is also an Ethernet frame of the IEEE 802.3 type. Preferably, after the padding redundant data is supplemented, a data length of the sixth packet is the same as a data length of the first packet. The data length of the first packet or the sixth packet is a sum of lengths of other fields except for the preamble field, the SFD field, and the frame check sequence field in FIG. 8 or FIG. 9. Optionally, the sixth packet is the same as the first packet.

Specifically, the user equipment may pad bits of the padding redundant data in the sixth packet with 0. It may be understood that padding may be performed in another manner provided that a data length of a packet obtained after padding is greater than or equal to 64 bytes. This is not specifically limited herein.

Specifically, in a possible implementation, the user equipment may supplement the payload part of the fifth packet with padding redundant data based on the first indication information, to generate the sixth packet, so that a data length of the sixth packet is greater than or equal to 64 bytes.

Specifically, when the first indication information includes length information of the padding redundant data, the user equipment pads the padding redundant data into the payload part of the fifth packet based on the length information of the padding redundant data.

Alternatively, when the first indication information includes location information of the padding redundant data, the user equipment finds a start location and an end location of the to-be-padded padding redundant data from the payload part of the fifth packet based on the location information of the padding redundant data, and pads the padding redundant data to a corresponding location.

Alternatively, when the first indication information includes length information of the payload data, the user equipment pads the padding redundant data into the payload part of the fifth packet based on the length information of the payload data.

Alternatively, when the first indication information includes location information of the payload data, the user equipment finds a start location and an end location of the payload data from the payload part of the fifth packet based on the location information of the payload data, and pads the padding redundant data into a location that is after the end location of the payload data and that is before the FCS field.

In an optional manner, when the first indication information includes only an indication indicating to-be-added padding redundant data, the user equipment determines the to-be-added padding redundant data based on the first indication information, and pads the padding redundant data into the fifth packet based on a minimum Ethernet frame length specified in a protocol.

In step 210, the user equipment receives a seventh packet, where the seventh packet is an uplink Ethernet packet.

The seventh packet is an Ethernet packet. During uplink data transmission, the user equipment obtains one or more uplink Ethernet packets that are uplink. The uplink Ethernet packet is the seventh packet. When the user equipment has a previous-hop node, the user equipment receives an uplink Ethernet packet sent by the previous-hop node. When the user equipment does not have a previous-hop node, the user equipment generates an uplink Ethernet packet.

Specifically, in a possible implementation, the uplink Ethernet packet is in an Ethernet II frame format. Specifically, as shown in FIG. 8, the uplink Ethernet packet includes a preamble field, an SFD field, a destination MAC address field, a source MAC address field, a type field, a data payload field, and an FCS field. The data payload field includes a payload field, and further includes a padding field.

Specifically, in a possible implementation, the uplink Ethernet packet is in an Ethernet IEEE 802.3 frame format. Specifically, as shown in FIG. 9, the uplink Ethernet packet includes a preamble field, an SFD field, a destination MAC address field, a source MAC address field, a payload length field, an LLC field, a data payload field, and an FCS field. The data payload field includes a payload field, and further includes a padding field.

In step 211, the user equipment deletes padding redundant data from the seventh packet.

After obtaining the seventh packet, the user equipment deletes the padding redundant data from the seventh packet.

Specifically, when the seventh packet is in the Ethernet II frame format, the user equipment deletes the padding redundant data from the seventh packet based on the first indication information.

Specifically, when the first indication information includes length information of the padding redundant data, the user equipment deletes the padding redundant data from a payload part of the seventh packet based on the length information of the padding redundant data.

Alternatively, when the first indication information includes location information of the padding redundant data, the user equipment finds a start location and an end location of the padding redundant data from the payload part of the seventh packet based on the location information of the padding redundant data, and deletes data from the start location to the end location.

Alternatively, when the first indication information includes length information of the payload data, the user equipment deletes data other than the payload data from the payload part of the uplink Ethernet packet based on the length information of the payload data, that is, deletes the padding redundant data.

Alternatively, when the first indication information includes location information of the payload data, the user equipment finds a start location and an end location of the payload data from the payload part of the seventh packet based on the location information of the payload data, and deletes data outside the start location to the end location of the payload data, that is, deletes the padding redundant data.

Specifically, when the seventh packet is in the Ethernet IEEE 802.3 frame format, the user equipment may determine a location of the padding redundant data in the seventh packet based on the first indication information, or determine a location of the padding redundant data in the seventh packet based on a length (Length) field, and further delete the padding redundant data from the seventh packet based on the location of the padding redundant data in the seventh packet. Specifically, data other than the payload data corresponding to the length field is deleted from the payload part of the seventh packet based on the length field, that is, the padding redundant data is deleted from the seventh packet.

In step 212, the user equipment generates an eighth packet, and sends the eighth packet to the wireless network device.

After deleting the padding redundant data from the seventh packet, the user equipment generates an eighth packet, where payload data in the eighth packet is payload data obtained after the padding redundant data is deleted from the seventh packet.

Specifically, after deleting the padding redundant data from the seventh packet, the user equipment encapsulates, according to an air interface protocol, the seventh packet from which the padding redundant data is deleted, to obtain the eighth packet.

For example, if a format of the seventh packet is the Ethernet II frame format shown in FIG. 8, and the seventh packet includes a padding field, a format of the eighth packet is shown in FIG. 12, where a destination MAC address field, a source MAC address field, a type field, and a payload field of the eighth packet are all the same as corresponding fields in the received seventh packet. An AN protocol header in FIG. 12 is also referred to as an air interface protocol header, and for example, may specifically include a PDCP header, an RLC header, and a MAC header.

If a format of the seventh packet is the IEEE 802.3 frame format shown in FIG. 9, a format of the eighth packet is shown in FIG. 7. A destination MAC address field, a source MAC address field, a length field, an LLC field, and a payload field of the eighth packet are all the same as corresponding fields in the received seventh packet. An AN protocol header in FIG. 7 is also referred to as an air interface protocol header, and for example, may specifically include a PDCP header, an RLC header, and a MAC header.

After generating the eighth packet, the user equipment sends the eighth packet to the radio access network device.

Optionally, in addition to deleting the padding redundant data from the seventh packet, the user equipment further deletes the preamble field, the SFD field, and the FCS field from the seventh packet. In other words, the preamble field, the SFD field, and the FCS field in the seventh packet are not transmitted between the user equipment, the radio access network device, and the user plane network element.

It should be noted that, a manner in which the user equipment sends a packet to the radio access network device is an air interface transmission manner, and is not limited by the requirement of the minimum Ethernet frame length. Therefore, an uplink Ethernet packet with a data length less than 64 bytes may also be transmitted. In addition, in the previous steps, the padding redundant data has been deleted from the payload part of the seventh packet, that is, a payload part of the eighth packet does not include the padding redundant data. Therefore, during air interface transmission, air interface resources can be saved.

In step 213, the radio access network device sends a ninth packet to the user plane network element.

After receiving the eighth packet sent by the user equipment, the radio access network device removes the air interface protocol header from the eighth packet, adds an N3 tunneling protocol header to generate a ninth packet, and sends the ninth packet to the user plane network element.

For example, if a format of the seventh packet is the Ethernet II frame format shown in FIG. 8, a format of the ninth packet is shown in FIG. 10, where a destination MAC address field, a source MAC address field, a type field, and a payload field of the ninth packet are all the same as corresponding fields in the eighth packet. An N3 tunneling protocol header field includes an N3 MAC header field, an IP header field, a UDP header field, and a GTP-U header field in FIG. 10. The N3 MAC header field refers to a protocol header field of a MAC layer used for transmitting a packet in a layer 2 transmission network between an access network node and the user plane network element. An FSC field in FIG. 10 is different from that in the first packet. The FCS field in FIG. 10 is calculated by the radio access network device based on a valid length of an N3 MAC frame. The valid length of the N3 MAC frame includes the N3 MAC header field, the IP header field, the UDP header field, the GTP-U header field, the destination MAC address field, the source MAC address field, the type field, and the payload field in FIG. 10.

For example, if a format of the seventh packet is the IEEE 802.3 frame format shown in FIG. 9, a format of the ninth packet is shown in FIG. 11, where a destination MAC address field, a source MAC address field, a length field, an LLC field, and a payload field of the ninth packet are all the same as corresponding fields in the eighth packet. An N3 tunneling protocol header field includes an N3 MAC header field, an IP header field, a UDP header field, and a GTP-U header field in FIG. 11. The N3 MAC header field refers to a protocol header field of a MAC layer used for transmitting a packet in a layer 2 transmission network between an access network node and the user plane network element. An FSC field in FIG. 11 is different from that in the first packet. The FCS field in FIG. 11 is calculated by the radio access network device based on a valid length of an N3 MAC frame. The valid length of the N3 MAC frame includes the N3 MAC header field, the IP header field, the UDP header field, the GTP-U header field, the destination MAC address field, the source MAC address field, the length field, and the payload field in FIG. 11.

It should be noted that in an application scenario of industrial packet transmission, after the user equipment deletes the padding redundant data from the seventh packet, a data length of the eighth packet may be less than a minimum Ethernet frame length, for example, less than 64 bytes. However, after a protocol header of the N3 tunneling protocol shown in FIG. 10 or FIG. 11 is added, a data length of the ninth packet may be greater than or equal to 64 bytes. Therefore, an Ethernet packet conforming to the protocol needs to meet the requirement of the minimum Ethernet frame length. A data length of the seventh packet is a sum of lengths of remaining parts that are in the packet format shown in FIG. 8 or FIG. 9 and that do not include the preamble field, the SFD field, and the FCS field, and a data length of the ninth packet is a sum of lengths of remaining parts that are in the packet format shown in FIG. 10 or FIG. 11 and that do not include the N3 MAC header field and the FCS field.

Specifically, the radio access network device encapsulates the eighth packet according to the N3 tunneling protocol to obtain the ninth packet. Specifically, in a possible implementation, the N3 tunneling protocol herein may be a GTP-U protocol. It may be understood that, in an actual application process, the N3 tunneling protocol may be another N3 tunneling protocol. This is not specifically limited herein. In an industrial scenario, for example, a simpler protocol stack may be used for the N3 tunneling protocol. For example, if UDP, IP, and GTP-U protocol layers shown in FIG. 10 or FIG. 11 are not used for the N3 tunneling protocol, and instead another protocol layer, for example, only the GTP-U layer, is used, the ninth packet does not include the IP header field and the UDP header field shown in FIG. 10 or FIG. 11, or the ninth packet does not include the IP header field, the UDP header field, and the GTP-U header field shown in FIG. 10 or FIG. 11, and a data length of the second packet may be less than 64 bytes. In this case, there are two manners.

Manner 1: The radio access network device encapsulates the eighth packet according to the N3 tunneling protocol to obtain a tenth packet; and adds, if a data length of the tenth packet is less than the minimum Ethernet frame length, tunneling protocol padding redundant data to a N3 tunneling protocol header of the tenth packet to generate the ninth packet, where a data length of the ninth packet is greater than or equal to the minimum Ethernet frame length.

Manner 2: If the radio access network device determines that a data length of an encapsulated packet obtained by the radio access network device by encapsulating the eighth packet according to the N3 tunneling protocol is less than the minimum Ethernet frame length, the user plane network element encapsulates the eighth packet according to the N3 tunneling protocol to obtain the encapsulated packet, and adds tunneling protocol padding redundant data to an N3 tunneling protocol header of the encapsulated packet to generate the ninth packet, where a data length of the ninth packet is greater than or equal to the minimum Ethernet frame length.

Optionally, before performing the operations in manner 1 or manner 2, the radio access network device receives second indication information from a session management network element. The second indication information indicates the radio access network device to perform an Ethernet frame length check on a packet to be sent through an N3 tunnel, and add tunneling protocol padding redundant data when an Ethernet frame length of the packet is less than 64 bytes. Specifically, the second indication information may be carried when the session management network element sends a control plane message to the radio access network device.

That is, in the foregoing manner 1, the radio access network device first generates the tenth packet, and then generates the ninth packet based on the tenth packet. In manner 2, a process of generating the tenth packet may not be included, and the ninth packet is directly generated based on the eighth packet.

It should be noted that the N3 tunneling protocol is a tunneling protocol between the user plane network element and an access network node. In the present invention, the N3 tunneling protocol may be replaced with another tunneling protocol that may be used for data transmission between the user plane network element and the access network node.

In step 214, the user plane network element adds padding redundant data to the ninth packet.

After the user plane network element receives the ninth packet, the user plane network element removes the N3 tunneling protocol header, and adds padding redundant data to generate an eleventh packet, so that a data length of the eleventh packet is greater than or equal to 64 bytes. Optionally, if the user equipment further deletes the preamble field, the SFD field, and the FCS field from the seventh packet in addition to the padding redundant data in the seventh packet, the user plane network element further supplements another field, such as an FCS field, a preamble field, and an SFD field, to generate the eleventh packet. This is not specifically limited herein. A format of the eleventh packet may be the same as a format of the seventh packet. That is, if the seventh packet is in the Ethernet II frame format shown in FIG. 8, the eleventh packet is also an Ethernet frame of the Ethernet II type; or if the seventh packet is in the IEEE 802.3 frame format shown in FIG. 9, the eleventh packet is also an Ethernet frame of the IEEE 802.3 type. Preferably, after the padding redundant data is supplemented, a data length of the eleventh packet is the same as a data length of the seventh packet. The data length of the seventh packet or the eleventh packet is a sum of lengths of other fields except for the preamble field, the SFD field, and the frame check sequence field in FIG. 8 or FIG. 9. Optionally, the eleventh packet is the same as the seventh packet.

Specifically, the user equipment may pad bits of the padding redundant data in the eleventh packet with 0. It may be understood that padding may be performed in another manner provided that a data length of a packet obtained after padding is greater than or equal to 64 bytes. This is not specifically limited herein.

Specifically, in a possible implementation, the user plane network element may supplement the payload part of the ninth packet with padding redundant data based on the first indication information, to generate the eleventh packet, so that a data length of the eleventh packet is greater than or equal to 64 bytes. Specifically, when the first indication information includes length information of the padding redundant data, the user plane network element pads the padding redundant data into the payload part of the ninth packet based on the length information of the padding redundant data.

Alternatively, when the first indication information includes location information of the padding redundant data, the user plane network element finds a start location and an end location of the to-be-padded padding redundant data from the payload part of the ninth packet based on the location information of the padding redundant data, and pads the padding redundant data to a corresponding location.

Alternatively, when the first indication information includes length information of the payload data, the user plane network element pads the padding redundant data into the payload part of the ninth packet based on the length information of the payload data.

Alternatively, when the first indication information includes location information of the payload data, the user plane network element finds a start location and an end location of the payload data from the payload part of the ninth packet based on the location information of the payload data, and pads the padding redundant data into a location that is after the end location of the payload data and that is before the FCS field.

In an optional manner, when the first indication information includes only an indication indicating to-be-added padding redundant data, the user plane network element determines the to-be-added padding redundant data based on the first indication information, and pads the padding redundant data into the ninth packet based on a minimum Ethernet frame length specified in a protocol.

In step 215, the user plane network element sends the eleventh packet.

The user plane network element sends the eleventh packet to a next-hop node.

In this embodiment, step 206 to step 209 are application scenarios of sending a downlink packet, and step 210 to step 215 are application scenarios of sending an uplink packet. In an actual application process, step 206 to step 209 may be separately implemented, and step 210 to step 215 may also be separately implemented or may be implemented in combination. This is not specifically limited herein.

In embodiments of this application, the user plane device deletes the padding redundant data from the received downlink packet, so that the downlink packet transmitted to the user equipment over the air interface does not include the padding redundant data, that is, the padding redundant data does not need to be transmitted, thereby saving air interface resources and improving an air interface capacity.

In embodiments of this application, the user equipment deletes the padding redundant data from the received uplink packet, so that the uplink packet transmitted to the radio access network device over the air interface does not include the padding redundant data, that is, the padding redundant data does not need to be transmitted, thereby saving air interface resources and improving an air interface capacity.

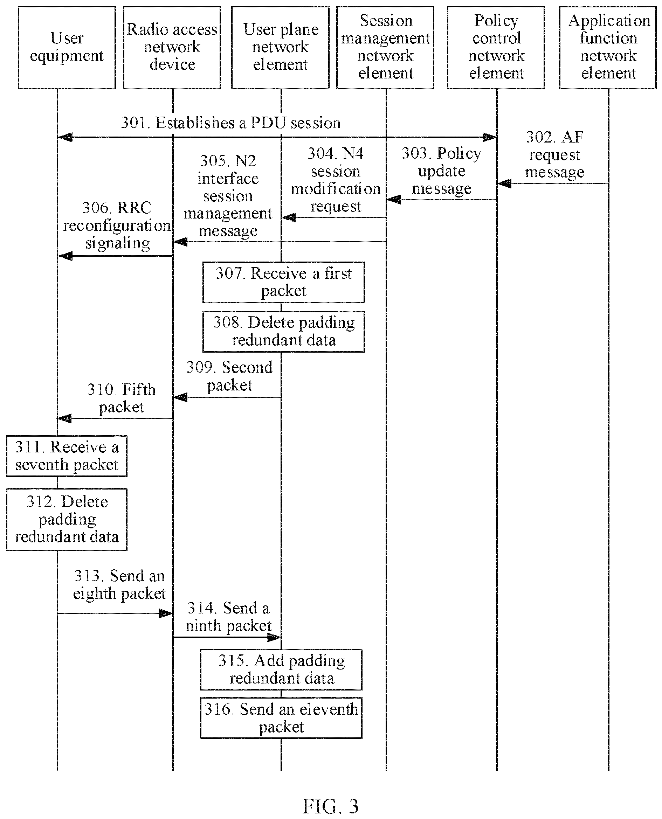

FIG. 3 is another schematic flowchart according to an embodiment of this application.

In step 301, user equipment establishes a PDU session.

In step 302, the application function network element sends an AF request message to a policy control network element.

In step 303, the policy control network element sends a policy update message to a session management network element.

In step 304, the session management network element sends an N4 session modification request to the user plane network element.

In this embodiment, step 301 to step 304 are similar to the method performed in step 201 to step 204 in the embodiment shown in FIG. 2, and details are not described herein again.

In step 305, the session management network element sends an N2 interface session management message to the radio access network device.

The session management network element obtains first indication information and an SDF template from the policy update message, and generates, according to a PCC rule in the policy update message, a QoS profile (QoS Profile) corresponding to the QoS flow. A QoS profile rule includes the first indication information. The SMF sends the included QoS profile and a corresponding QoS flow identifier to the radio access network device by using N2 interface session management information. Optionally, the first indication information may not be included in the QoS profile. In other words, the session management network element sends the first indication information and the corresponding QoS flow identifier to the radio access network device by using the N2 interface session management message, to indicate to the radio access network device that the first indication information is for the QoS flow identified by the QoS flow identifier.

It should be noted that the N2 interface session management message herein is sent by the SMF to the radio access network device through the AMF.

A sequence of performing step 304 and step 305 is not limited. The SMF may initiate a PDU session modification procedure after step 303. In the PDU session modification procedure, step 305 is first performed, and then step 304 is performed; or step 304 may be first performed, and then step 305 is performed; or step 304 and step 305 may be performed at the same time. This is not specifically limited herein.

It should be noted that the first indication information included in step 304 and step 305 may be different. For example, the first indication information in step 304 indicates to delete padding redundant data, and the first indication information in step 305 indicates to add padding redundant data; or the first indication information in step 304 indicates to add padding redundant data, and the first indication information in step 305 indicates to delete padding redundant data.

In step 306, the radio access network device sends radio resource control (Radio Resource Control, RRC) reconfiguration signaling to the user equipment.

The radio access network device obtains the first indication information and the QoS flow identifier in the N2 interface session management message, adds the first indication information and the QoS flow identifier to RRC reconfiguration signaling, and sends the RRC reconfiguration signaling to the user equipment.

In step 307, the user plane network element receives a first packet.

In step 308, the user plane network element deletes padding redundant data from the first packet.

In step 309, the user plane network element generates a second packet, and sends the second packet to a radio access network device.

In step 310, the radio access network device sends a fifth packet to the user equipment.

In step 311, the user equipment receives a seventh packet, where the seventh packet is an uplink Ethernet packet.

In step 312, the user equipment deletes padding redundant data from the seventh packet.

In step 313, the user equipment generates an eighth packet, and sends the eighth packet to the wireless network device.

In step 314, the radio access network device sends a ninth packet to the user plane network element.

In step 315, the user plane network element adds padding redundant data to the ninth packet.

In step 316, the user plane network element sends the eleventh packet.

In this embodiment, step 307 to step 316 are similar to the method performed in step 206 to step 215 in the embodiment shown in FIG. 2, and details are not described herein again.

In this embodiment, step 307 to step 310 are application scenarios of sending a downlink packet, and step 311 to step 316 are application scenarios of sending an uplink packet. In an actual application process, step 307 to step 310 may be separately implemented, and step 311 to step 316 may also be separately implemented or may be implemented in combination. This is not specifically limited herein.

In embodiments of this application, the user plane device deletes the padding redundant data from the received downlink packet, so that the downlink packet transmitted to the user equipment over the air interface does not include the padding redundant data, that is, the padding redundant data does not need to be transmitted, thereby saving air interface resources and improving an air interface capacity.

In embodiments of this application, the user equipment deletes the padding redundant data from the received uplink packet, so that the uplink packet transmitted to the radio access network device over the air interface does not include the padding redundant data, that is, the padding redundant data does not need to be transmitted, thereby saving air interface resources and improving an air interface capacity.

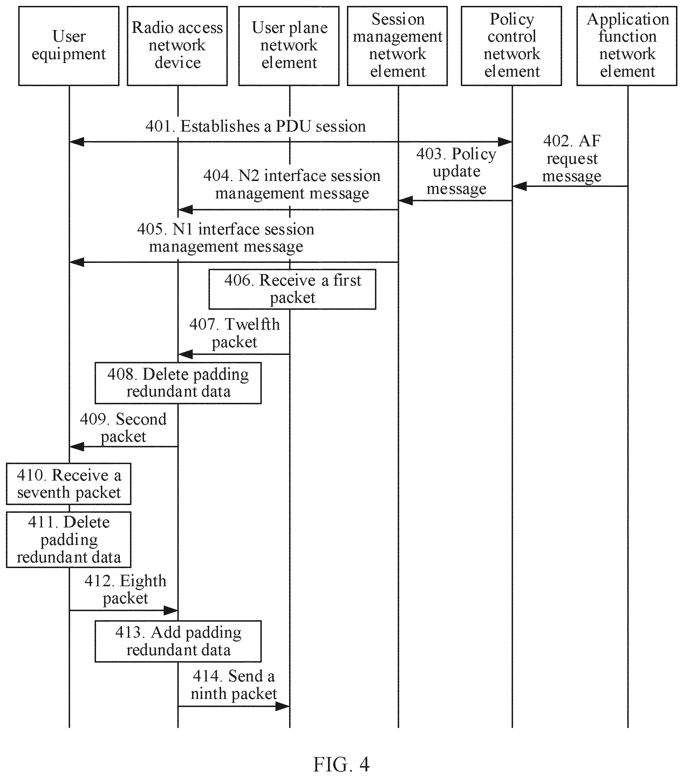

FIG. 4 is another schematic flowchart of a data transmission method according to an embodiment of this application.

In step 401, user equipment establishes a PDU session.

In step 402, the application function network element sends an AF request message to a policy control network element.

In step 403, the policy control network element sends a policy update message to a session management network element.

In this embodiment, step 401 to step 403 are similar to the method performed in step 301 to step 303 in the embodiment shown in FIG. 3, and details are not described herein again.

In step 404, the session management network element sends an N2 interface session management message to the radio access network device.

The session management network element obtains first indication information and an SDF template from the policy update message, and generates, according to a PCC rule in the policy update message, a QoS profile (QoS Profile) corresponding to the QoS flow. A QoS profile rule includes the first indication information. The SMF sends the included QoS profile and a corresponding QoS flow identifier to the radio access network device by using N2 interface session management information. Optionally, the first indication information may not be included in the QoS profile. In other words, the session management network element sends the first indication information and the corresponding QoS flow identifier to the radio access network device by using the N2 interface session management message, to indicate to the radio access network device that the first indication information is for the QoS flow identified by the QoS flow identifier.

It should be noted that the N2 interface session management message herein is sent by the SMF to the radio access network device through the AMF.

In step 405, the session management network element sends an N1 interface session management message to the user equipment.

The session management network element obtains the first indication information and the SDF template in the policy update message, and generates a QoS rule (QoS Rule) based on the PCC rule in the policy update message. The QoS rule includes a QoS flow identifier, and further includes the first indication information and a packet filter set corresponding to the QoS flow identifier. The SMF sends the QoS rule to the user equipment UE based on the N1 interface session management information. Optionally, the first indication information may not be included in the QoS rule. In other words, the session management network element sends the first indication information and the corresponding QoS flow identifier to the user equipment by using the N1 interface session management message, to indicate to the user equipment that the first indication information is for the QoS flow identified by the QoS flow identifier.

It should be noted that the N1 interface session management message herein is sent by the SMF to the radio access network device through the AMF, and then sent to the user equipment through the radio access network device. The N1 interface session management message specifically carries a PDU session modification command. In other words, the N1 interface session management message includes a PDU session modification command. The PDU session modification command includes the QoS rule. The QoS rule includes the QoS flow identifier and the first indication information. Alternatively, the PDU session modification command includes the QoS flow identifier and the first indication information, and optionally, further includes the QoS rule.

A sequence of performing step 404 and step 405 is not limited. The SMF may initiate a PDU session modification procedure after step 403. In the PDU session modification procedure, step 405 is first performed, and then step 404 is performed; or step 404 may be first performed, and then step 405 is performed; or step 404 and step 405 may be performed at the same time. This is not specifically limited herein.

It should be noted that the first indication information included in step 404 and step 405 may be different. For example, the first indication information in step 404 indicates to delete padding redundant data, and the first indication information in step 405 indicates to add padding redundant data; or the first indication information in step 404 indicates to add padding redundant data, and the first indication information in step 405 indicates to delete padding redundant data.

It should be noted that, in this embodiment, the first indication information and the QoS flow identifier may alternatively be sent to the user equipment through the radio access network device RAN, that is, similar to the method performed in step 306 in the embodiment shown in FIG. 3. Details are not described herein again. When the first indication information and the QoS flow identifier corresponding to the SDF template are sent to the user equipment through the RAN, step 405 is not performed.

In step 406, the user plane network element receives a first packet.

In step 407, the user plane network element sends a twelfth packet to the radio access network device.

After receiving the first packet, the user plane network element encapsulates the first packet according to the N3 tunneling protocol to obtain the twelfth packet. Specifically, in a possible implementation, the N3 tunneling protocol herein may be a GTP-U protocol. It may be understood that, in an actual application process, the N3 tunneling protocol may be another tunneling protocol. This is not specifically limited herein.

For example, if a format of the first packet is the Ethernet II frame format shown in FIG. 8, and the first packet includes a padding field, a format of the twelfth packet is shown in FIG. 10, where a destination MAC address field, a source MAC address field, a type field, and a payload field of the twelfth packet are all the same as corresponding fields in the first packet. An N3 tunneling protocol header field includes an N3 MAC header field, an IP header field, a UDP header field, and a GTP-U header field in FIG. 10. The N3 MAC header field refers to a protocol header field of a MAC layer used for transmitting a packet in a layer 2 transmission network between an access network node and the user plane network element. An FSC field in FIG. 10 is different from that in the first packet. The FCS field in FIG. 10 is calculated by the user plane network element based on a valid length of an N3 MAC frame. The valid length of the N3 MAC frame includes the N3 MAC header field, the IP header field, the UDP header field, the GTP-U header field, the destination MAC address field, the source MAC address field, the type field, and the payload field in FIG. 10.

For example, if a format of the first packet is the IEEE 802.3 frame format shown in FIG. 9, a format of the twelfth packet is shown in FIG. 11, where a destination MAC address field, a source MAC address field, a length field, an LLC field, and a payload field of the twelfth packet are all the same as corresponding fields in the first packet. An N3 tunneling protocol header field includes an N3 MAC header field, an IP header field, a UDP header field, and a GTP-U header field in FIG. 11. The N3 MAC header field refers to a protocol header field of a MAC layer used for transmitting a packet in a layer 2 transmission network between an access network node and the user plane network element. An FSC field in FIG. 11 is different from that in the first packet. The FCS field in FIG. 11 is calculated by the user plane network element based on a valid length of an N3 MAC frame. The valid length of the N3 MAC frame includes the N3 MAC header field, the IP header field, the UDP header field, the GTP-U header field, the destination MAC address field, the source MAC address field, the length field, and the payload field in FIG. 11.

Optionally, before the user plane network element encapsulates, according to the N3 tunneling protocol, the first packet, to obtain the twelfth packet, the user plane network element further deletes the preamble field, the SFD field, and the FCS field from the first packet. To be specific, the preamble field, the SFD field, and the FCS field in the first packet are not transmitted between the user plane network element, the radio access network device, and the user equipment.

It should be noted that the N3 tunneling protocol is a tunneling protocol between the user plane network element and an access network node. In the present invention, the N3 tunneling protocol may be replaced with another tunneling protocol that may be used for data transmission between the user plane network element and the access network node.

In step 408, the radio access network device deletes the padding redundant data.

After receiving the twelfth packet, the radio access network device removes the N3 tunneling protocol header from the twelfth packet, and deletes the padding redundant data from the twelfth packet.

Specifically, after receiving the twelfth packet, the radio access network device deletes the padding redundant data based on the first indication information received in step 404.

Specifically, when the first packet is in the Ethernet II frame format, the radio access network device deletes the padding redundant data from the twelfth packet based on the first indication information.

Specifically, when the first indication information includes length information of the padding redundant data, the radio access network device deletes the padding redundant data from a payload part of the twelfth packet based on the length information of the padding redundant data.

Alternatively, when the first indication information includes location information of the padding redundant data, the radio access network device finds a start location and an end location of the padding redundant data from the payload part of the twelfth packet based on the location information of the padding redundant data, and deletes data from the start location to the end location.

Alternatively, when the first indication information includes length information of the payload data, the radio access network device deletes data other than the payload data from the payload part of the twelfth packet based on the length information of the payload data, that is, deletes the padding redundant data.

Alternatively, when the first indication information includes location information of the payload data, the radio access network device finds a start location and an end location of the payload data from the payload part of the twelfth packet based on the location information of the payload data, and deletes data outside the start location to the end location of the payload data, that is, deletes the padding redundant data.

Specifically, when the first packet is in the Ethernet IEEE 802.3 frame format, the radio access network device may determine a location of the padding redundant data in the twelfth packet based on the first indication information, or determine a location of the padding redundant data in the twelfth packet based on a length (Length) field shown in FIG. 9, and further delete the padding redundant data from the twelfth packet based on the location of the padding redundant data in the twelfth packet. Specifically, data other than the payload data corresponding to the length field is deleted from the payload part of the twelfth packet based on the length field, that is, the padding redundant data is deleted.

It should be noted that, in an actual application process, the first indication information may include only one or more of the length information of the padding redundant data, the location information of the padding redundant data, the length information of the payload data, or the location information of the payload data. When the first indication information includes one or more of the foregoing information, the radio access network device may delete the padding redundant data based on the first indication information. Alternatively, in a possible implementation, the first indication information may further include an indication for to-be-deleted padding redundant data, and the indication indicates the radio access network device to delete the padding redundant data based on the first indication information. Alternatively, in a possible implementation, if the first indication information includes only an indication for to-be-deleted padding redundant data, the radio access network device deletes the padding redundant data based on the first indication information.

In step 409, the radio access network device sends a second packet to the user equipment.

After deleting the padding redundant data from the twelfth packet, the radio access network device adds an air interface protocol header to generate the second packet, and sends the second packet to the user equipment.

For example, if a format of the twelfth packet is the Ethernet II frame format shown in FIG. 8, a format of the second packet is shown in FIG. 12, where a destination MAC address field, a source MAC address field, a type field, and a payload field of the second packet are all the same as corresponding fields in the twelfth packet. An AN protocol header in FIG. 12 is also referred to as an air interface protocol header, and for example, may specifically include a PDCP header, an RLC header, and a MAC header.

If a format of the twelfth packet is the IEEE 802.3 frame format shown in FIG. 9, a format of the second packet is shown in FIG. 7. A destination MAC address field, a source MAC address field, a length field, an LLC field, and a payload field of the second packet are all the same as corresponding fields in the twelfth packet. An AN protocol header in FIG. 7 is also referred to as an air interface protocol header, and for example, may specifically include a PDCP header, an RLC header, and a MAC header.

It should be noted that a manner in which the radio access network device sends a packet to the user equipment is an air interface transmission manner, and is not limited by the requirement of the minimum Ethernet frame length. Therefore, after the N3 tunneling protocol header is removed from the twelfth packet, a length of the twelfth packet is less than 64 bytes, that is, a length of the second packet is less than 64 bytes, and may also be transmitted. In addition, the padding redundant data has been deleted from the payload part of the twelfth packet, that is, a payload part of the second packet does not include the padding redundant data. Therefore, during air interface transmission, air interface resources can be saved.

In a possible implementation, after the user equipment receives the second packet, an application layer of the user equipment may directly obtain the payload data part of the second packet for use.

Alternatively, in a possible implementation, when the user equipment is an intermediate node of the network and needs to continue to forward an Ethernet frame to a next-hop node, the user equipment supplements a payload part of the second packet with padding redundant data, to generate a thirteenth packet, so that a data length of the thirteenth packet is greater than or equal to 64 bytes. Optionally, in a possible implementation, before the user plane network element encapsulates, according to the N3 tunneling protocol, the first packet from which the padding redundant data is deleted, to obtain the twelfth packet, if the user plane network element further deletes the preamble field, the SFD field, and the FCS field from the first packet, the user equipment further needs to supplement another field, for example, an FCS field, a preamble field, and an SFD field, to generate the thirteenth packet. This is not specifically limited herein. A format of the thirteenth packet may be the same as a format of the first packet. That is, if the first packet is in the Ethernet II frame format shown in FIG. 8, the thirteenth packet also an Ethernet frame of the Ethernet II type; or if the first packet is in the IEEE 802.3 frame format shown in FIG. 9, the thirteenth packet is also an Ethernet frame of the IEEE 802.3 type. Preferably, after the padding redundant data is supplemented, a data length of the thirteenth packet is the same as a data length of the first packet. The data length of the first packet or the thirteenth packet is a sum of lengths of other fields except for the preamble field, the SFD field, and the frame check sequence field in FIG. 8 or FIG. 9. Optionally, the thirteenth packet is the same as the first packet.

Specifically, the user equipment may pad bits of the padding redundant data in the thirteenth packet with 0. It may be understood that padding may be performed in another manner provided that a data length of a packet obtained after padding is greater than or equal to 64 bytes. This is not specifically limited herein.

Specifically, in a possible implementation, the user equipment may supplement the payload part of the twelfth packet with padding redundant data based on the first indication information, to generate the thirteenth packet, so that a data length of the thirteenth packet is greater than or equal to 64 bytes.

Specifically, when the first indication information includes length information of the padding redundant data, the user equipment pads the padding redundant data into the payload part of the twelfth packet based on the length information of the padding redundant data.

Alternatively, when the first indication information includes location information of the padding redundant data, the user equipment finds a start location and an end location of the to-be-padded padding redundant data from the payload part of the twelfth packet based on the location information of the padding redundant data, and pads the padding redundant data to a corresponding location.

Alternatively, when the first indication information includes length information of the payload data, the user equipment pads the padding redundant data into the payload part of the twelfth packet based on the length information of the payload data.

Alternatively, when the first indication information includes location information of the payload data, the user equipment finds a start location and an end location of the payload data from the payload part of the twelfth packet based on the location information of the payload data, and pads the padding redundant data into a location that is after the end location of the payload data and that is before the FCS field.

In an optional manner, when the first indication information includes only an indication indicating to-be-added padding redundant data, the user equipment determines the to-be-added padding redundant data based on the first indication information, and pads the padding redundant data into the twelfth packet based on a minimum Ethernet frame length specified in a protocol.

In step 410, the user equipment receives a seventh packet, where the seventh packet is an uplink Ethernet packet.

In step 411, the user equipment deletes padding redundant data from the seventh packet.

In step 412, the user equipment generates an eighth packet, and sends the eighth packet to the wireless network device.

Step 410 to step 412 are similar to the method performed in step 210 to step 212 in the embodiment shown in FIG. 2, and details are not described herein again.

In step 413, the radio access network device adds padding redundant data to the eighth packet.

After receiving the eighth packet sent by the user equipment, the radio access network device removes the air interface protocol header from the eighth packet, adds padding redundant data to the eighth packet, and adds an N3 tunneling protocol header to generate a ninth packet, so that a data length of the ninth packet is greater than or equal to 64 bytes. For example, if a format of the seventh packet is the Ethernet II frame format shown in FIG. 8, a format of the ninth packet is shown in FIG. 10, where a destination MAC address field, a source MAC address field, a type field, and a payload field of the ninth packet are all the same as corresponding fields in the eighth packet. An N3 tunneling protocol header field includes an N3 MAC header field, an IP header field, a UDP header field, and a GTP-U header field in FIG. 10. The N3 MAC header field refers to a protocol header field of a MAC layer used for transmitting a packet in a layer 2 transmission network between an access network node and the user plane network element. An FSC field in FIG. 10 is different from that in the seventh packet. The FCS field in FIG. 10 is calculated by the radio access network device based on a valid length of an N3 MAC frame. The valid length of the N3 MAC frame includes the N3 MAC header field, the IP header field, the UDP header field, the GTP-U header field, the destination MAC address field, the source MAC address field, the type field, and the payload field in FIG. 10.

For example, if a format of the seventh packet is the IEEE 802.3 frame format shown in FIG. 9, a format of the ninth packet is shown in FIG. 11, where a destination MAC address field, a source MAC address field, a length field, an LLC field, and a payload field of the ninth packet are all the same as corresponding fields in the eighth packet. An N3 tunneling protocol header field includes an N3 MAC header field, an IP header field, a UDP header field, and a GTP-U header field in FIG. 11. The N3 MAC header field refers to a protocol header field of a MAC layer used for transmitting a packet in a layer 2 transmission network between an access network node and the user plane network element. An FSC field in FIG. 11 is different from that in the seventh packet. The FCS field in FIG. 11 is calculated by the radio access network device based on a valid length of an N3 MAC frame. The valid length of the N3 MAC frame includes the N3 MAC header field, the IP header field, the UDP header field, the GTP-U header field, the destination MAC address field, the source MAC address field, the length field, and the payload field in FIG. 11.

Specifically, the radio access network device encapsulates the eighth packet according to the N3 tunneling protocol to obtain the ninth packet. Specifically, in a possible implementation, the N3 tunneling protocol herein may be a GTP-U protocol. It may be understood that, in an actual application process, the N3 tunneling protocol may be another N3 tunneling protocol. This is not specifically limited herein.

It should be noted that the N3 tunneling protocol is a tunneling protocol between the user plane network element and an access network node. In the present invention, the N3 tunneling protocol may be replaced with another tunneling protocol that may be used for data transmission between the user plane network element and the access network node.

A format of the ninth packet may be the same as a format of the seventh packet. That is, if the seventh packet is in the Ethernet II frame format shown in FIG. 8, the ninth packet is also an Ethernet frame of the Ethernet II type; or if the seventh packet is in the IEEE 802.3 frame format shown in FIG. 9, the ninth packet is also an Ethernet frame of the IEEE 802.3 type. The data length of the seventh packet or the ninth packet is a sum of lengths of other fields except for the preamble field, the SFD field, and the frame check sequence field in FIG. 8 or FIG. 9.

Specifically, the radio access network device may pad bits of the padding redundant data in the ninth packet with 0. It may be understood that padding may be performed in another manner provided that a data length of a packet obtained after padding is greater than or equal to 64 bytes. This is not specifically limited herein.

Specifically, in a possible implementation, the radio access network may supplement the payload part of the eighth packet with padding redundant data based on the first indication information, to generate the ninth packet, so that a data length of the ninth packet is greater than or equal to 64 bytes. Specifically, when the first indication information includes length information of the padding redundant data, the radio access network pads the padding redundant data into the payload part of the eighth packet based on the length information of the padding redundant data.

Alternatively, when the first indication information includes location information of the padding redundant data, the radio access network finds a start location and an end location of the to-be-padded padding redundant data from the payload part of the eighth packet based on the location information of the padding redundant data, and pads the padding redundant data to a corresponding location.

Alternatively, when the first indication information includes length information of the payload data, the radio access network pads the padding redundant data into the payload part of the eighth packet based on the length information of the payload data.

Alternatively, when the first indication information includes location information of the payload data, the radio access network finds a start location and an end location of the payload data from the payload part of the eighth packet based on the location information of the payload data, and pads the padding redundant data into a location that is after the end location of the payload data and that is before the FCS field.

In an optional manner, when the first indication information includes only an indication indicating to-be-added padding redundant data, the radio access network determines the to-be-added padding redundant data based on the first indication information, and pads the padding redundant data into the eighth packet based on a minimum Ethernet frame length specified in a protocol.

In step 414, the radio access network device sends a ninth packet to the user plane network element.

After generating the ninth packet, the radio access network device sends the ninth packet to the user plane network element.

After receiving the ninth packet, the user plane network element may remove an N3 tunneling protocol header from the ninth packet to generate a fourteenth packet, and send the fourteenth packet to a next-hop node.

Optionally, if the user equipment further deletes the preamble field, the SFD field, and the FCS field from the seventh packet in addition to the padding redundant data in the seventh packet, the user plane network element further supplements another field, to generate the fourteenth packet.

It should be noted that, a format of the fourteenth packet may be the same as a format of the seventh packet. That is, if the seventh packet is in the Ethernet II frame format shown in FIG. 8, the fourteenth packet is also an Ethernet frame of the Ethernet II type; or if the seventh packet is in the IEEE 802.3 frame format shown in FIG. 9, the fourteenth packet is also an Ethernet frame of the IEEE 802.3 type. The data length of the seventh packet or the fourteenth packet is a sum of lengths of other fields except for the preamble field, the SFD field, and the frame check sequence field in FIG. 8 or FIG. 9. Optionally, the fourteenth packet is the same as the seventh packet.

In this embodiment, step 406 to step 409 are application scenarios of sending a downlink packet, and step 410 to step 414 are application scenarios of sending an uplink packet. In an actual application process, step 406 to step 409 may be separately implemented, and step 410 to step 414 may also be separately implemented or may be implemented in combination. This is not specifically limited herein.

In embodiments of this application, the user plane device deletes the padding redundant data from the received downlink Ethernet packet, so that the downlink packet transmitted to the user equipment over the air interface does not include the padding redundant data, that is, the padding redundant data does not need to be transmitted, thereby saving air interface resources and improving an air interface capacity.

In embodiments of this application, the user equipment deletes the padding redundant data from the received uplink Ethernet packet, so that the uplink packet transmitted to the radio access network device over the air interface does not include the padding redundant data, that is, the padding redundant data does not need to be transmitted, thereby saving air interface resources and improving an air interface capacity.

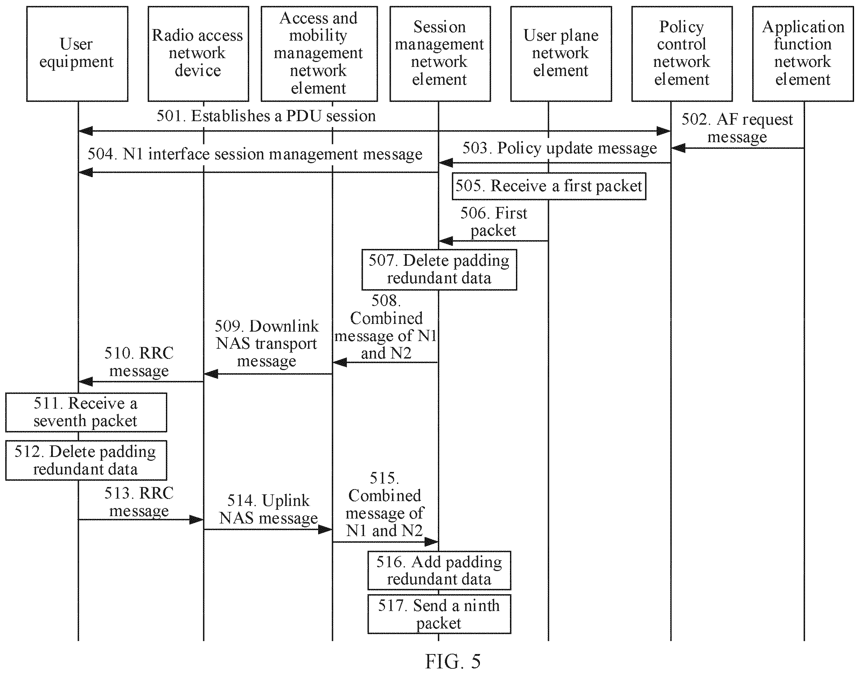

FIG. 5 is another schematic flowchart of a data transmission method according to an embodiment of this application.

In step 501, user equipment establishes a PDU session.

The user equipment UE establishes a PDU session. The PDU session is for transmitting a cellular Internet of Things (Cellular Internet of Things, CIoT) packet through a control plane, that is, transmitting a CIoT packet by using a (Non-Access-Stratum, NAS) message.

It should be noted that this embodiment may be applied to a scenario in which a 5G system interworks with an industrial network, or may be applied to another network scenario. This is not specifically limited herein. In a scenario in which the 5G system interworks with an industrial network, the application server may be a production line controller or another industrial node in the industrial network.

In step 502, an application function network element sends an AF request message to a policy control network element.

In this embodiment, step 502 is similar to the method performed in step 202 in the embodiment shown in FIG. 2, and details are not described herein again.

In step 503, the policy control network element sends a policy update message to a session management network element.

After the policy control network element receives the AF request message sent by the session management network element, the policy control network element obtains the first indication information and a service data flow SDF template in the AF request message, generates first indication information based on the second indication information, adds the first indication information and the SDF template to the policy update message, and sends the policy update message to the session management network element. The SDF template includes an application identifier or traffic filtering information received by the policy control network element in step 502, or application identifiers of one or more applications corresponding to the DN received in step 502 or one or more pieces of or traffic filtering information corresponding to the DN received in step 502. The first indication information is for deleting or adding padding redundant data of a packet of a service described by the SDF template.

Specifically, in a possible implementation, the policy update message includes a PCC rule, and the PCC rule further includes a first indication information and an SDF template.

Specifically, in a possible implementation, the first indication information may further indicate length information of padding redundant data of first padding redundant data. Specifically, the length information of the padding redundant data of the first padding redundant data may be a length of padding redundant data (padding) in a load (payload) field of the packet.

Specifically, in a possible implementation, the first indication information may further indicate location information of padding redundant data of first padding redundant data. Specifically, the location information of the padding redundant data of the first padding redundant data may be a start location and an end location of padding redundant data in a payload field of the packet.

Specifically, in a possible implementation, the first indication information may further indicate length information of payload data of the packet. Specifically, the length information of the payload data of the packet may be a length of payload data in the payload field of the packet.

Specifically, in a possible implementation, the first indication information may further indicate location information of payload data of the packet. Specifically, the location information of the payload data of the packet may be a start location and an end location of payload data in a payload field of the packet.

It should be noted that, in an actual application process, the first indication information may include one or more of the length information of the padding redundant data, the location information of the padding redundant data, the length information of the payload data, or the location information of the payload data. When the first indication information includes one or more of the foregoing information, the device receiving the first indication information may add or delete the padding redundant data based on the first indication information. Alternatively, in a possible implementation, the first indication information may further include an indication for to-be-added or to-be-deleted padding redundant data. The indication indicates a device receiving the first indication information to add or delete the padding redundant data based on the first indication information when the device receives a service packet. Alternatively, in a possible implementation, if the first indication information includes only an indication for to-be-added or to-be-deleted padding redundant data, a device receiving the first indication information adds or deletes the padding redundant data based on the first indication information when the device receives a service packet.

After the session management network element receives the policy update message, the session management network element performs session management based on the policy update message for processing.

Specifically, the session management network element binds the PCC rule obtained from the policy update message to a PDU session identifier. The PCC rule includes the first indication information and the SDF template. Binding the PCC rule to the PDU session identifier may be understood as applying the PCC rule to the PDU session, that is, binding one or more service flows corresponding to the SDF template in the PCC rule to the PDU session, and the first indication information includes same length information of padding redundant data.

In step 504, the session management network element sends an N1 interface session management message to the user equipment.

The session management network element obtains the first indication information and the SDF template in the policy update message, and the SMF sends, to the user equipment by using N1 interface session management information, the PDU session identifier corresponding to the SDF and the first indication information. Specifically, the N1 interface session management message carries a PDU session modification command. In other words, the N1 interface session management message includes the PDU session modification command, and the PDU session modification command includes the PDU session identifier and the first indication information. It should be noted that the N1 interface session management message herein is sent by the SMF to the radio access network device through the AMF, and then sent to the user equipment through the radio access network device.

It should be noted that, in this embodiment, the PDU session identifier and the first indication information may alternatively be sent to the user equipment through the radio access network device RAN, that is, similar to the method performed in step 306 in the embodiment shown in FIG. 3. Details are not described herein again.

In step 505, the user plane network element receives a first packet.

The first packet is an Ethernet packet. During downlink data transmission, the user plane network element receives one or more downlink first packets, and the one or more first packets correspond to one PDU session identifier.

Specifically, in a possible implementation, the first packet is in an Ethernet II frame format. Specifically, as shown in FIG. 8, the first packet includes a preamble field, a start frame delimiter (Start Frame Delimiter, SFD) field, a destination MAC address field, a source MAC address field, a type field, a data payload field, and a frame check sequence (Frame Check Sequence, FCS) field. The data payload field includes a payload field, and further includes a padding field.

Specifically, in a possible implementation, the first packet is in an Ethernet IEEE 802.3 frame format. Specifically, as shown in FIG. 9, the first packet includes a preamble field, an SFD field, a destination MAC address field, a source MAC address field, a length field, a logical link control (Logic Link Control, LLC) field, a data payload field, and an FCS field. The data payload field includes a payload field, and further includes a padding field.

In step 506, the user plane network element sends the first packet to the session management network element.

After receiving the first packet, the user plane network element UPF forwards the first packet to the session management network element, that is, sends the first packet to the session management network element.

In step 507, the session management network element deletes padding redundant data.

After receiving the first packet, the session management network element deletes the padding redundant data from the first packet.

Specifically, when the first packet is in the Ethernet II frame format, the session management network element SMF deletes the padding redundant data from the first packet based on the first indication information.

Specifically, when the first indication information includes length information of the padding redundant data, the session management network element deletes the padding redundant data from a payload part of the first packet based on the length information of the padding redundant data. For example, the session management network element SMF may determine an end location of the padding redundant data based on a frame format in FIG. 8 or FIG. 9, and then determine a start location of the padding redundant data based on a length of the padding redundant data included in the first indication information, to delete the padding redundant data based on the start location and the end location.

Alternatively, when the first indication information includes location information of the padding redundant data, the session management network element SMF finds a start location and an end location of the padding redundant data from the payload part of the first packet based on the location information of the padding redundant data, and deletes data from the start location to the end location.

Alternatively, when the first indication information includes length information of the payload data, the session management network element deletes data other than the payload data from the payload part of the first packet based on the length information of the payload data, that is, deletes the padding redundant data. For example, the session management network element SMF may determine an end location of the padding redundant data based on a frame format in FIG. 8 or FIG. 9, and then determine a start location of the padding redundant data based on a length of the padding redundant data included in the first indication information, to delete the padding redundant data based on the start location and the end location.

Alternatively, when the first indication information includes location information of the payload data, the session management network element finds a start location and an end location of the payload data from the payload part of the first packet based on the location information of the payload data, and deletes data outside the start location to the end location of the payload data, that is, deletes the padding redundant data.

Specifically, when the first packet is in the Ethernet IEEE 802.3 frame format, the session management network element may determine a location of the padding redundant data in the first packet based on the first indication information, or determine a location of the padding redundant data in the first packet based on a length (Length) field shown in FIG. 9, and further delete the padding redundant data from the first packet based on the location of the padding redundant data in the first packet. Specifically, data other than the payload data corresponding to the length field is deleted from the payload part of the first packet based on the length field, that is, the padding redundant data is deleted.

It should be noted that, in an actual application process, the first indication information may include only one or more of the length information of the padding redundant data, the location information of the padding redundant data, the length information of the payload data, or the location information of the payload data. When the first indication information includes one or more of the foregoing information, the user plane network element may delete the padding redundant data based on the first indication information. Alternatively, in a possible implementation, the first indication information may further include an indication for to-be-deleted padding redundant data, and the indication indicates the session management network element to delete the padding redundant data based on the first indication information. Alternatively, in a possible implementation, if the first indication information includes only an indication for to-be-deleted padding redundant data, the session management network element SMF deletes the padding redundant data based on the first indication information.

Optionally, in addition to deleting the padding redundant data, the session management network element further deletes the preamble field, the SFD field, and the FCS field from the first packet. To be specific, the preamble field, the SFD field, and the FCS field in the first packet are not transmitted between the user session management network element and the user equipment.

In step 508, the session management network element sends a combined message of N1 and N2 to an access and mobility management network element.

After deleting the padding redundant data from the first packet, the session management network element generates a second packet, and sends the second packet to the mobility management network element AMF by using the NAS message. Load data in the second packet is payload data obtained after the padding redundant data is deleted from the first packet.

Specifically, in a possible implementation, the session management network element sends the second packet and the PDU session identifier to the AMF by using the combined message (Namf_Communication_N1N2Message Transfer service operation) of N1 and N2.

In step 509, the mobility management network element sends a downlink NAS transport message to the radio access network device.

After receiving the second packet and the PDU session identifier, the mobility management network element sends a downlink NAS transport message to the radio access network device.

Specifically, the mobility management network element generates a downlink NAS transport message, adds the second packet and the PDU session identifier to the downlink NAS transport message, and sends the downlink NAS transport message to the radio access network device.

In step 510, the radio access network device sends an RRC message to the user equipment.

After receiving the downlink NAS transport message, the radio access network device sends the downlink NAS message to the UE by using an RRC message.

Specifically, in a possible implementation. the RAN sends the downlink NAS message to the UE by using an RRC DL message.

In a possible implementation, after the user equipment receives the second packet, an application layer of the user equipment may directly obtain the payload data part of the second packet for use.

Alternatively, in a possible implementation, when the user equipment is an intermediate node of the network and needs to continue to forward an Ethernet frame to a next-hop node, the user equipment supplements a payload part of the second packet with padding redundant data, to generate a sixth packet, so that a data length of the sixth packet is greater than or equal to 64 bytes. Optionally, in a possible implementation, if the session management network element further deletes the preamble field, the SFD field, and the FCS field from the first packet, the user equipment further needs to supplement another field, for example, an FCS field, a preamble field, and an SFD field, to generate the sixth packet. This is not specifically limited herein. A format of the sixth packet is the same as a format of the first packet. That is, if the first packet is in the Ethernet II frame format shown in FIG. 8, the sixth packet is also an Ethernet frame of the Ethernet II type; or if the first packet is in the IEEE 802.3 frame format shown in FIG. 9, the sixth packet is also an Ethernet frame of the IEEE 802.3 type. Preferably, after the padding redundant data is supplemented, a data length of the sixth packet is the same as a data length of the first packet. The data length of the first packet or the sixth packet is a sum of lengths of other fields except for the preamble field, the SFD field, and the frame check sequence field in FIG. 8 or FIG. 9. Optionally, the sixth packet is the same as the first packet.

Specifically, the user equipment may pad bits of the padding redundant data in the sixth packet with 0. It may be understood that padding may be performed in another manner provided that a data length of a packet obtained after padding is greater than or equal to 64 bytes. This is not specifically limited herein.

Specifically, in a possible implementation, the user equipment may supplement the payload part of the second packet with padding redundant data based on the first indication information, to generate the sixth packet, so that a data length of the sixth packet is greater than or equal to 64 bytes.

Specifically, when the first indication information includes length information of the padding redundant data, the user equipment pads the padding redundant data into the payload part of the second packet based on the length information of the padding redundant data.

Alternatively, when the first indication information includes location information of the padding redundant data, the user equipment finds a start location and an end location of the to-be-padded padding redundant data from the payload part of the fifth packet based on the location information of the padding redundant data, and pads the padding redundant data to a corresponding location.

Alternatively, when the first indication information includes length information of the payload data, the user equipment pads the padding redundant data into the payload part of the second packet based on the length information of the payload data.

Alternatively, when the first indication information includes location information of the payload data, the user equipment finds a start location and an end location of the payload data from the payload part of the fifth packet based on the location information of the payload data, and pads the padding redundant data into a location that is after the end location of the payload data and that is before the FCS field.

In an optional manner, when the first indication information includes only an indication indicating to-be-added padding redundant data, the user equipment determines the to-be-added padding redundant data based on the first indication information, and pads the padding redundant data into the second packet based on a minimum Ethernet frame length specified in a protocol.

In step 511, the user equipment receives a seventh packet, where the seventh packet is an uplink Ethernet packet.

The seventh packet is an Ethernet packet. During uplink data transmission, the user equipment obtains one or more uplink Ethernet packets that are uplink. The uplink Ethernet packet is the seventh packet. When the user equipment has a previous-hop node, the user equipment receives an uplink Ethernet packet sent by the previous-hop node. When the user equipment does not have a previous-hop node, the user equipment generates an uplink Ethernet packet.

Specifically, in a possible implementation, the uplink Ethernet packet is in an Ethernet II frame format. Specifically, as shown in FIG. 8, the uplink Ethernet packet includes a preamble field, an SFD field, a destination MAC address field, a source MAC address field, a type field, a data payload field, and an FCS field. The data payload field includes a payload field, and further includes a padding field.

Specifically, in a possible implementation, the uplink Ethernet packet is in an Ethernet IEEE 802.3 frame format. Specifically, as shown in FIG. 9, the uplink Ethernet packet includes a preamble field, an SFD field, a destination MAC address field, a source MAC address field, a payload length field, an LLC field, a data payload field, and an FCS field. The data payload field includes a payload field, and further includes a padding field.

In step 512, the user equipment deletes padding redundant data.

After obtaining the seventh packet, the user equipment deletes the padding redundant data from the seventh packet.

Specifically, when the seventh packet is in the Ethernet II frame format, the user equipment deletes the padding redundant data from the seventh packet based on the first indication information.

Specifically, when the first indication information includes length information of the padding redundant data, the user equipment deletes the padding redundant data from a payload part of the seventh packet based on the length information of the padding redundant data.

Alternatively, when the first indication information includes location information of the padding redundant data, the user equipment finds a start location and an end location of the padding redundant data from the payload part of the seventh packet based on the location information of the padding redundant data, and deletes data from the start location to the end location.

Alternatively, when the first indication information includes length information of the payload data, the user equipment deletes data other than the payload data from the payload part of the uplink Ethernet packet based on the length information of the payload data, that is, deletes the padding redundant data.

Alternatively, when the first indication information includes location information of the payload data, the user equipment finds a start location and an end location of the payload data from the payload part of the seventh packet based on the location information of the payload data, and deletes data outside the start location to the end location of the payload data, that is, deletes the padding redundant data.

Specifically, when the seventh packet is in the Ethernet IEEE 802.3 frame format, the user equipment may determine a location of the padding redundant data in the seventh packet based on the first indication information, or determine a location of the padding redundant data in the seventh packet based on a length (Length) field, and further delete the padding redundant data from the seventh packet based on the location of the padding redundant data in the seventh packet. Specifically, data other than the payload data corresponding to the length field is deleted from the payload part of the seventh packet based on the length field, that is, the padding redundant data is deleted from the seventh packet.

Optionally, in addition to deleting the padding redundant data from the seventh packet, the user equipment further deletes the preamble field, the SFD field, and the FCS field from the seventh packet. To be specific, the preamble field, the SFD field, and the FCS field in the seventh packet are not transmitted between the user equipment and the session management network element.

In step 513, the user equipment sends an RRC message to the radio access network device.

After deleting the padding redundant data from the seventh packet, the user equipment generates an eighth packet, where payload data in the eighth packet is payload data obtained after the padding redundant data is deleted from the seventh packet, and sends the eighth packet to the radio access network device RAN by using the RRC message.

Specifically, the user equipment encapsulates the eighth packet and a corresponding PDU session identifier into an uplink NAS message, and sends the uplink NAS message to the RAN by including the uplink NAS message in an RRC message.

In step 514, the radio access network device sends the uplink NAS message to the access and mobility management network element AMF.

After the radio access network device RAN receives the uplink NAS message sent by the user equipment, the radio access network device forwards the uplink NAS message to the access and mobility management network element AMF.

In step 515, the access and mobility management network element AMF sends a combined message of N1 and N2 to the session management network element.

After receiving the uplink NAS message sent by the RAN, the access and mobility management network element AMF includes the NAS message in a combined message (Namf_Communication_N1N2MessageTransfer service operation) of N1 and N2, and sends the combined message to the session management network element.

In step 516, the session management network element adds padding redundant data.

After receiving the eighth packet carried in the NAS message, the session management network element adds padding redundant data, to generate a ninth packet, so that a data length of the ninth packet is greater than or equal to 64 bytes. Optionally, if the user equipment further deletes the preamble field, the SFD field, and the FCS field from the seventh packet in addition to the padding redundant data in the seventh packet, the session management network element further supplements another field, such as an FCS field, a preamble field, and an SFD field, to generate the ninth packet. This is not specifically limited herein. A format of the ninth packet may be the same as a format of the seventh packet. That is, if the seventh packet is in the Ethernet II frame format shown in FIG. 8, the ninth packet is also an Ethernet frame of the Ethernet II type; or if the seventh packet is in the IEEE 802.3 frame format shown in FIG. 9, the ninth packet is also an Ethernet frame of the IEEE 802.3 type. Preferably, after the padding redundant data is supplemented, a data length of the ninth packet is the same as a data length of the seventh packet. The data length of the seventh packet or the ninth packet is a sum of lengths of other fields except for the preamble field, the SFD field, and the frame check sequence field in FIG. 8 or FIG. 9. Optionally, the ninth packet is the same as the seventh packet.

Specifically, the session management network element may pad bits of the padding redundant data in the ninth packet with 0. It may be understood that padding may be performed in another manner provided that a data length of a packet obtained after padding is greater than or equal to 64 bytes. This is not specifically limited herein.

Specifically, in a possible implementation, the session management network element may supplement the payload part of the eighth packet with padding redundant data based on the first indication information, to generate the ninth packet, so that a data length of the ninth packet is greater than or equal to 64 bytes. Specifically, when the first indication information includes length information of the padding redundant data, the session management network element pads the padding redundant data into the payload part of the eighth packet based on the length information of the padding redundant data.

Alternatively, when the first indication information includes location information of the padding redundant data, the session management network element finds a start location and an end location of the to-be-padded padding redundant data from the payload part of the eighth packet based on the location information of the padding redundant data, and pads the padding redundant data to a corresponding location.

Alternatively, when the first indication information includes length information of the payload data, the session management network element pads the padding redundant data into the payload part of the eighth packet based on the length information of the payload data.

Alternatively, when the first indication information includes location information of the payload data, the session management network element finds a start location and an end location of the payload data from the payload part of the eighth packet based on the location information of the payload data, and pads the padding redundant data into a location that is after the end location of the payload data and that is before the FCS field.

In an optional manner, when the first indication information includes only an indication indicating to-be-added padding redundant data, the session management network element determines the to-be-added padding redundant data based on the first indication information. and pads the padding redundant data into the eighth packet based on a minimum Ethernet frame length specified in a protocol.

In step 517, the session management network element sends the ninth packet.

The session management network element sends the ninth packet to a next-hop node.

In this embodiment, step 505 to step 510 are application scenarios of sending a downlink packet, and step 511 to step 517 are application scenarios of sending an uplink packet. In an actual application process, step 505 to step 510 may be separately implemented, and step 511 to step 517 may also be separately implemented or may be implemented in combination. This is not specifically limited herein.

In embodiments of this application, the user plane device deletes the padding redundant data from the received downlink packet, so that the downlink packet transmitted to the user equipment over the air interface does not include the padding redundant data, that is, the padding redundant data does not need to be transmitted, thereby saving air interface resources and improving an air interface capacity.

In embodiments of this application, the user equipment deletes the padding redundant data from the received uplink packet, so that the uplink packet transmitted to the radio access network device over the air interface does not include the padding redundant data, that is, the padding redundant data does not need to be transmitted, thereby saving air interface resources and improving an air interface capacity.

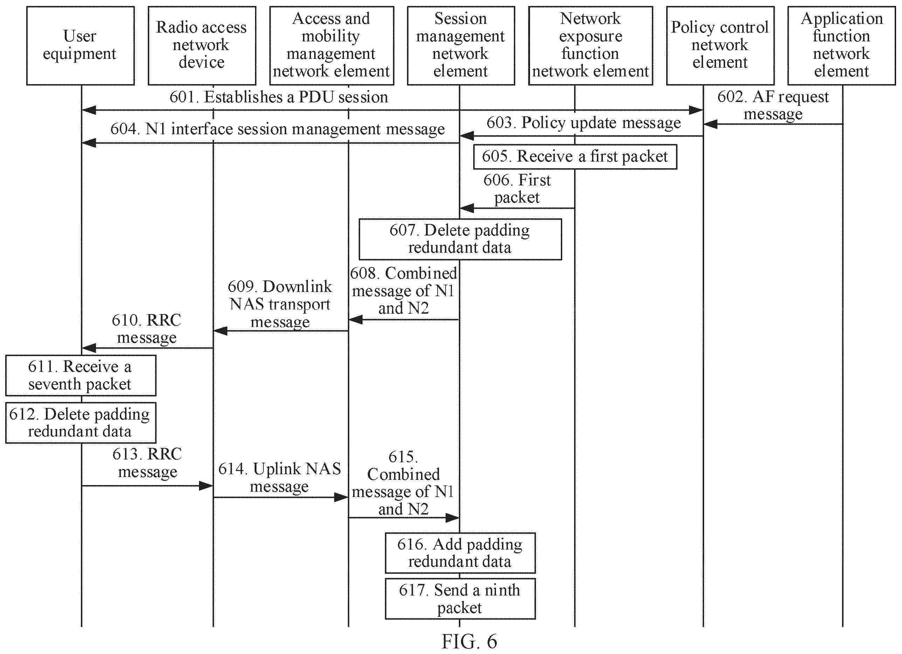

FIG. 6 is another schematic flowchart of a data transmission method according to an embodiment of this application.

In step 601, user equipment establishes a PDU session.

In step 602, the application function network element sends an AF request message to a policy control network element.

In step 603, the policy control network element sends a policy update message to a session management network element.

In step 604, the session management network element sends a PDU session modification command to the user equipment.

In this embodiment, step 601 to step 604 are similar to the method performed in step 501 to step 504 in the embodiment shown in FIG. 5, and details are not described herein again.

In step 605, a network exposure function network element receives a first packet.

The first packet is an Ethernet packet. During downlink data transmission, the NEF receives one or more downlink first packets, and the one or more first packets correspond to one PDU session identifier.

Specifically, in a possible implementation, the first packet is in an Ethernet II frame format. Specifically, as shown in FIG. 8, the first packet includes a preamble field, an SFD field, a destination MAC address field, a source MAC address field, a type field, a data payload field, and an FCS field. The data payload field includes a payload field, and further includes a padding field.

Specifically, in a possible implementation, the first packet is in an Ethernet IEEE 802.3 frame format. Specifically, as shown in FIG. 9, the first packet includes a preamble field, an SFD field, a destination MAC address field, a source MAC address field, a length field, an LLC field, a data payload field, and an FCS field. The data payload field includes a payload field, and further includes a padding field.

In step 606, the NEF sends the first packet to the session management network element.

After receiving the first packet, the NEF forwards the first packet to the session management network element, that is, sends the first packet to the session management network element.

Specifically, in a possible implementation, the NEF forwards the first packet to the SMF by using an Nsmf_NIDD_Delivery request message.

In step 607, the session management network element deletes padding redundant data.

In step 608, the session management network element sends a combined message of N1 and N2 to an access and mobility management network element AMF.

In step 609, the mobility management network element AMF sends a downlink NAS transport message to the radio access network device.

In step 610, the radio access network device sends an RRC message to the user equipment.

In step 611, the user equipment receives a seventh packet, where the seventh packet is an uplink Ethernet packet.

In step 612, the user equipment deletes padding redundant data.

In step 613, the user equipment sends an RRC message to the radio access network device.

In step 614, the radio access network device sends the uplink NAS message to the access and mobility management network element.

In step 615, the access and mobility management network element sends a combined message of N1 and N2 to the session management network element.

In step 616, the session management network element adds padding redundant data.

In this embodiment, step 607 to step 616 are similar to the method performed in step 507 to step 516 in the embodiment shown in FIG. 5, and details are not described herein again.

In step 617, the session management network element sends the ninth packet.

After obtaining the ninth packet by adding the padding redundant data, the session management network element sends the ninth packet to the NEF by using an Nnef_SMContext_Delivery request message.

Specifically, after receiving the ninth packet, the NEF sends the ninth packet to a next-hop node.

In this embodiment, step 605 to step 610 are application scenarios of sending a downlink packet, and step 611 to step 617 are application scenarios of sending an uplink packet. In an actual application process, step 605 to step 610 may be separately implemented, and step 611 to step 617 may also be separately implemented or may be implemented in combination. This is not specifically limited herein.

In embodiments of this application, the user plane device deletes the padding redundant data from the received downlink packet, so that the downlink packet transmitted to the user equipment over the air interface does not include the padding redundant data, that is, the padding redundant data does not need to be transmitted, thereby saving air interface resources and improving an air interface capacity.

In embodiments of this application, the user equipment deletes the padding redundant data from the received uplink packet, so that the uplink packet transmitted to the radio access network device over the air interface does not include the padding redundant data, that is, the padding redundant data does not need to be transmitted, thereby saving air interface resources and improving an air interface capacity.

The foregoing describes the data transmission method in embodiments of this application. The following describes a device provided in embodiments of this application.

FIG. 13 is a schematic diagram of a structure of a device according to an embodiment of this application.

A device includes a receiving unit 1301, a deletion unit 1302, a generation unit 1303, and a sending unit 1304.

The receiving unit 1301 is configured to receive a first packet, where load data in the first packet includes padding redundant data.

The deletion unit 1302 is configured to delete the padding redundant data.

The generation unit 1303 is configured to generate a second packet, where load data in the second packet is payload data obtained after the padding redundant data is deleted from the first packet.

The sending unit 1304 is configured to send the second packet to a second device.

The method performed by units of the device in this embodiment is similar to the method performed by network devices or user equipments in FIG. 2 to FIG. 6, and details are not described herein again.

FIG. 13 is a schematic diagram of another structure of a device according to an embodiment of this application.

A device includes a receiving unit 1301, a deletion unit 1302, a generation unit 1303, and a sending unit 1304.

The receiving unit 1301 is configured to receive a first packet, where load data in the first packet includes padding redundant data.

The deletion unit 1302 is configured to delete the padding redundant data.

The generation unit 1303 is configured to generate a second packet, where load data in the second packet is payload data obtained after the padding redundant data is deleted from the first packet.

The sending unit 1304 is configured to send the second packet to a second device.

Optionally, the receiving unit 1301 is further configured to receive first indication information.

The deletion unit 1302 is further configured to delete the padding redundant data based on the first indication information.

Optionally, the first indication information indicates to delete the padding redundant data, or the first indication information includes length information of the padding redundant data or location information of the padding redundant data, or the first indication information includes length information of payload data of the first downlink packet or location information of payload data of the first packet.

Optionally, the deletion unit 1302 is further configured to delete the padding redundant data based on a length field of the first packet.

Optionally, the device is a UPF, the second device is a RAN, and the first packet is a downlink Ethernet packet.

Optionally, the generation unit 1303 is further configured to encapsulate a third packet according to an N3 tunneling protocol to obtain a fourth packet, where the third packet is a packet obtained after the padding redundant data is deleted from the first packet; and add, if a data length of the fourth packet is less than a minimum Ethernet frame length, tunneling protocol padding redundant data to an N3 tunneling protocol header of the fourth packet to obtain the second packet, where a data length of the second packet is greater than or equal to the minimum Ethernet frame length; or
the generation unit 1303 is further configured to encapsulate, if the device determines that a data length of an encapsulated packet obtained by the first device by encapsulating a third packet according to an N3 tunneling protocol is less than a minimum Ethernet frame length, the third packet according to the N3 tunneling protocol to obtain the encapsulated packet, and adds tunneling protocol padding redundant data to an N3 tunneling protocol header of the encapsulated packet to obtain the second packet, where a data length of the second packet is greater than or equal to the minimum Ethernet frame length, and the third packet is a packet obtained after the padding redundant data is deleted from the first packet.

Optionally, the device is a RAN, the second device is UE, and the first packet is a downlink packet.

Optionally, the device is UE, the second device is a RAN, and the first packet is an uplink Ethernet packet.

Optionally, the device is an SMF, the second device is UE, and the first packet is a downlink Ethernet packet.

Optionally, the device is UE, the second device is an SMF, and the first packet is an uplink Ethernet packet.

The method performed by units of the device in this embodiment is similar to the method performed by network devices or user equipments in FIG. 2 to FIG. 6, and details are not described herein again.

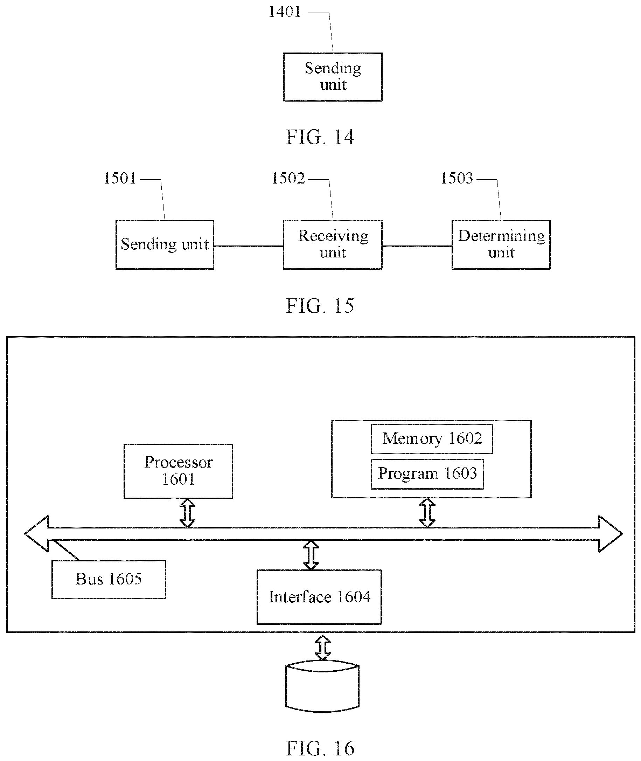

FIG. 14 is a schematic diagram of a structure of a device according to an embodiment of this application.

A device includes: a sending unit 1401, configured to send first indication information to a fourth device, where the first indication information is for deleting padding redundant data of a first packet, or the first indication information is for adding padding redundant data to the first packet, and the first indication information includes length information of padding redundant data, or location information of padding redundant data, or the first indication information includes length information of payload data of the first packet, or location information of payload data of the first packet.

The method performed by units of the device in this embodiment is similar to the method performed by network devices in FIG. 2 to FIG. 6, and details are not described herein again.

FIG. 15 is a schematic diagram of another structure of a device according to an embodiment of this application.

A device includes: a sending unit 1501, configured to send first indication information to a fourth device, where the first indication information is for deleting padding redundant data of a first packet, or the first indication information is for adding padding redundant data to the first packet, and the first indication information includes length information of padding redundant data, or location information of padding redundant data, or the first indication information includes length information of payload data of the first packet, or location information of payload data of the first packet.

Optionally, when the first indication information is for deleting the padding redundant data from the first packet,
the device is a PCF, the fourth device is an SMF, and the first packet is an Ethernet packet; or
the device is an SMF, the fourth device is a UPF, and the first packet is an Ethernet packet; or
the device is an SMF, the fourth device is UE, and the first packet is an Ethernet packet; or
the device is an SMF, and the fourth device is a RAN; or
the device is a RAN, and the fourth device is UE.

Optionally, when the first indication information is for adding padding redundant data to the first packet,
the device is an SMF, the fourth device is a UPF, and the first packet is an Ethernet packet; or
the device is an SMF, the fourth device is UE, and the first packet is an Ethernet packet; or
the device is an SMF, and the fourth device is a RAN.

Optionally, the device is a policy control network element PCF, the fourth device is a session management network element SMF, and a fifth device is an application function network element AF. The device further includes a receiving unit 1502 and a determining unit 1503.

The receiving unit 1502 is configured to receive second indication information from a fifth device, where the second indication information indicates length information of the padding redundant data or location information of the padding redundant data, or the second indication information indicates length information of payload data of the first packet or location information of payload data of the first packet.

The determining unit 1503 is configured to determine the first indication information based on the second indication information.

The method performed by units of the device in this embodiment is similar to the method performed by network devices in FIG. 2 to FIG. 6, and details are not described herein again.

FIG. 16 is a schematic diagram of a structure of a device according to an embodiment of this application.

The device includes a processor 1601, a memory 1602, a bus 1605, and an interface 1604. The processor 1601 is connected to the memory 1602 and the interface 1604. The bus 1605 is connected to the processor 1601, the memory 1602, and the interface 1604 respectively. The interface 1604 is configured to receive or send data. The processor 1601 is a single-core or multi-core central processing unit, or an application-specific integrated circuit, or one or more integrated circuits configured to implement embodiments of the present invention. The memory 1602 may be a random access memory (random access memory, RAM), or may be a non-volatile memory (non-volatile memory), for example, at least one hard disk memory. The memory 1602 is configured to store computer-executable instructions. Specifically, the computer-executable instructions may include a program 1603.

In this embodiment, when the processor 1601 invokes the program 1603, the device in FIG. 16 is enabled to perform the operations performed by the network devices in the embodiments shown in FIG. 2 to FIG. 6. Details are not described herein again.

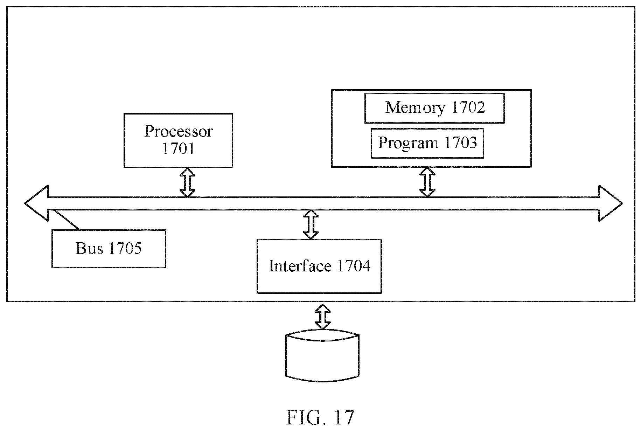

FIG. 17 is a schematic diagram of a structure of a device according to an embodiment of this application.

The device includes a processor 1701, a memory 1702, a bus 1705, and an interface 1704. The processor 1701 is connected to the memory 1702 and the interface 1704. The bus 1705 is connected to the processor 1701, the memory 1702, and the interface 1704 respectively. The interface 1704 is configured to receive or send data. The processor 1701 is a single-core or multi-core central processing unit, or an application-specific integrated circuit, or one or more integrated circuits configured to implement embodiments of the present invention. The memory 1702 may be a random access memory (random access memory, RAM), or may be a non-volatile memory (non-volatile memory), for example, at least one hard disk memory. The memory 1702 is configured to store computer-executable instructions. Specifically, the computer-executable instructions may include a program 1703.

In this embodiment, when the processor 1701 invokes the program 1703, the device in FIG. 17 is enabled to perform the operations performed by the user equipment in the embodiments shown in FIG. 2 to FIG. 6. Details are not described herein again.

It should be understood that, the processor mentioned in the network device or user equipment in the foregoing embodiments of this application or the processor provided in the foregoing embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA), or another programmable logic device, a discrete gate or a transistor logic device, a discrete hardware component, or the like. The general-purpose processor may be a microprocessor, or the processor may be any conventional processor or the like.

It should be further understood that there may be one or more processors in the network device or the user equipment in the foregoing embodiments of this application, and the quantity of the processors may be adjusted based on an actual application scenario. This is merely an example for description herein, and is not limited. There may be one or more memories in embodiments of this application. This may be adjusted based on an actual application scenario. This is merely an example for description herein, and is not limited.

It should be further noted that, when the network device or the user equipment includes a processor (or a processing unit) and a memory, the processor in this application may be integrated with the memory, or the processor may be connected to the memory by an interface. This may be adjusted based on an actual application scenario. This is not limited.

An embodiment of this application further provides a computer program or a computer program product including a computer program. When the computer program is executed by a computer, the computer is enabled to implement the method procedure related to the network device or the user equipment in any one of the foregoing method embodiments.

An embodiment of this application further provides a computer-readable storage medium. The computer-readable storage medium stores a computer program. When the computer program is executed by a computer, the method procedure related to the network device or the user equipment in any one of the foregoing method embodiments is implemented.

All or some of the foregoing embodiments in FIG. 2 to FIG. 6 may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk solid state disk (SSD)), or the like.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Names of messages/frames/information, modules, units, or the like provided in the embodiments of this application are merely examples, and other names may be used provided that the messages/frames/information, modules, units, or the like have same functions.

The terms used in embodiments of this application are merely for the purpose of illustrating specific embodiments, and are not intended to limit the present invention. Terms "a", "the", and "this" of singular forms used in embodiments of this application are also intended to include plural forms, unless otherwise specified in a context clearly. It should be further understood that, in the descriptions of this application, "/" represents an "or" relationship between associated objects, unless otherwise specified. For example, A/B may represent A or B. A term "and/or" in this application is merely an association relationship between associated objects, and represents that three relationships may exist. For example, A and/or B may represent the following three cases: Only A exists, both A and B exist, and only B exists, where A and B each may be singular or plural.

Depending on the context, for example, words "if" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments to some technical features thereof, without departing from the scope of the technical solutions of embodiments of this application as defined by the claims.

## Claims

1. A data transmission method, comprising:
receiving (206, 210, 307, 311, 407, 410, 506, 511, 606, 611), by a first device, a first packet including a payload field and a padding field, wherein load data in the first packet comprises payload data included in the payload field and padding redundant data included in the padding field, wherein a size of the first packet is greater than or equal to a preset minimum size;
deleting (207, 211, 308, 312, 408, 411, 507, 512, 607, 612), by the first device, the padding redundant data;
generating, by the first device, a second packet, wherein load data in the second packet is the payload data obtained after the padding redundant data is deleted from the first packet, wherein a size of the second packet is less than the preset minimum size; and
sending (208, 212, 309, 313, 409, 412, 508, 513, 608, 613), by the first device, the second packet to a second device.

2. The method according to claim 1, wherein the method further comprises:
receiving, by the first device, first indication information; and
the deleting (207, 211, 308, 312, 408, 411, 507, 512, 607, 612), by the first device, the padding redundant data comprises:
deleting, by the first device, the padding redundant data based on the first indication information, wherein:
the first indication information comprises location information of the padding redundant data, or
the first indication information comprises location information of the payload data.

3. The method according to claim 1 or claim 2, wherein the first device is a user plane network element UPF, the second device is a radio access network device RAN, and the first packet is a downlink Ethernet packet.

4. The method according to any one of claims 1 to 2, wherein the first device is a radio access network device RAN, the second device is user equipment UE, and the first packet is a downlink packet.

5. The method according to any one of claims 1 to 2, wherein the first device is user equipment UE, the second device is a radio access network device RAN or a session management network element SMF, and the first packet is an uplink Ethernet packet.

6. The method according to any one of claims 1 to 2, wherein the first device is a session management network element SMF, the second device is user equipment UE, and the first packet is a downlink Ethernet packet.

7. A device, comprising respective units (1301, 1302, 1303, 1304) configured for performing the method according to any one of claims 1 to 6.

8. A computer storage medium, storing instructions, wherein when the instructions are executed on a computer, the computer is enabled to perform the method according to any one of claims 1 to 6.

## Patentansprüche

1. Datenübertragungsverfahren, umfassend:
Empfangen (206, 210, 307, 311, 407, 410, 506, 511, 606, 611), durch eine erste Vorrichtung, eines ersten Pakets, das ein Nutzlastfeld und ein Füllfeld umfasst, wobei Lastdaten in dem ersten Paket Nutzlastdaten, die in dem Nutzlastfeld beinhaltet sind, und redundante Fülldaten, die in dem Füllfeld beinhaltet sind, umfassen, wobei eine Größe des ersten Pakets größer oder gleich einer voreingestellten Mindestgröße ist;
Löschen (207, 211, 308, 312, 408, 411, 507, 512, 607, 612), durch die erste Vorrichtung, der redundanten Fülldaten;
Erzeugen, durch die erste Vorrichtung, eines zweiten Pakets, wobei Lastdaten in dem zweiten Paket die Nutzlastdaten sind, die erlangt werden, nachdem die redundanten Fülldaten aus dem ersten Paket gelöscht werden, wobei eine Größe des zweiten Pakets kleiner als die voreingestellte Mindestgröße ist; und
Senden (208, 212, 309, 313, 409, 412, 508, 513, 608, 613), durch die erste Vorrichtung, des zweiten Pakets an eine zweite Vorrichtung.

2. Verfahren nach Anspruch 1, wobei das Verfahren ferner Folgendes umfasst:
Empfangen, durch die erste Vorrichtung, erster Angabeinformationen; und
das Löschen (207, 211, 308, 312, 408, 411, 507, 512, 607, 612), durch die erste Vorrichtung, der redundanten Fülldaten Folgendes umfasst:
Löschen, durch die erste Vorrichtung, der redundanten Fülldaten basierend auf den ersten Angabeinformationen, wobei:
die ersten Angabeinformationen Standortinformationen der redundanten Fülldaten umfassen oder
die ersten Angabeinformationen Standortinformationen der Nutzlastdaten umfassen.

3. Verfahren nach Anspruch 1 oder Anspruch 2, wobei die erste Vorrichtung ein User-Plane-Network-Element, UPF, ist, die zweite Vorrichtung eine Radio-Access-Network-Vorrichtung, RAN-Vorrichtung, ist und das erste Paket ein Downlink-Ethernet-Paket ist.

4. Verfahren nach einem der Ansprüche 1 bis 2, wobei die erste Vorrichtung eine Funkzugangsnetzwerkvorrichtung, RAN-Vorrichtung, ist, die zweite Vorrichtung eine Benutzerausrüstung, UE, ist und das erste Paket ein Downlink-Paket ist.

5. Verfahren nach einem der Ansprüche 1 bis 2, wobei die erste Vorrichtung eine Benutzerausrüstung, UE, ist, die zweite Vorrichtung eine Funkzugangsnetzwerkvorrichtung, RAN-Vorrichtung, oder ein Sitzungsverwaltungsnetzwerkelement, SMF, ist und das erste Paket ein Uplink-Ethernet-Paket ist.

6. Verfahren nach einem der Ansprüche 1 bis 2, wobei die erste Vorrichtung ein Sitzungsverwaltungsnetzwerkelement, SMF, ist, die zweite Vorrichtung eine Benutzerausrüstung, UE, ist und das erste Paket ein Downlink-Ethernet-Paket ist.

7. Vorrichtung, umfassend entsprechende Einheiten (1301, 1302, 1303, 1304), die dazu konfiguriert sind, das Verfahren nach einem der Ansprüche 1 bis 6 durchzuführen.

8. Computerspeichermedium, das Anweisungen speichert, wobei, wenn die Anweisungen auf einem Computer ausgeführt werden, der Computer in die Lage versetzt wird, das Verfahren nach einem der Ansprüche 1 bis 6 durchzuführen.

## Revendications

1. Procédé de transmission de données, comprenant :
la réception (206, 210, 307, 311, 407, 410, 506, 511, 606, 611), par un premier dispositif, d'un premier paquet comportant un champ de charge utile et un champ de bourrage, dans lequel les données de charge dans le premier paquet comprennent des données de charge utile incluses dans le champ de charge utile et des données redondantes de bourrage incluses dans le champ de bourrage, dans lequel une taille du premier paquet est supérieure ou égale à une taille minimale prédéfinie ;
la suppression (207, 211, 308, 312, 408, 411, 507, 512, 607, 612), par le premier dispositif, des données redondantes de bourrage ;
la génération, par le premier dispositif, d'un second paquet, dans lequel les données de charge dans le second paquet sont les données de charge utile obtenues après la suppression des données redondantes de bourrage du premier paquet, dans lequel une taille du second paquet est inférieure à la taille minimale prédéfinie ; et
l'envoi (208, 212, 309, 313, 409, 412, 508, 513, 608, 613), par le premier dispositif, du second paquet à un second dispositif.

2. Procédé selon la revendication 1, dans lequel le procédé comprend également :
la réception, par le premier dispositif, de premières informations d'indication ; et
la suppression (207, 211, 308, 312, 408, 411, 507, 512, 607, 612), par le premier dispositif, des données redondantes de bourrage comprend :
la suppression, par le premier dispositif, des données redondantes de bourrage sur la base des premières informations d'indication, dans lequel :
les premières informations d'indication comprennent des informations de localisation des données redondantes de bourrage, ou
les premières informations d'indication comprennent des informations de localisation des données de charge utile.

3. Procédé selon la revendication 1 ou la revendication 2, dans lequel le premier dispositif est un élément de réseau de plan utilisateur UPF, le second dispositif est un dispositif de réseau d'accès radio RAN, et le premier paquet est un paquet Ethernet de liaison descendante.

4. Procédé selon l'une quelconque des revendications 1 et 2, dans lequel le premier dispositif est un dispositif de réseau d'accès radio RAN, le second dispositif est un équipement utilisateur UE, et le premier paquet est un paquet de liaison descendante.

5. Procédé selon l'une quelconque des revendications 1 et 2, dans lequel le premier dispositif est un équipement utilisateur UE, le second dispositif est un dispositif de réseau d'accès radio RAN ou un élément de réseau de gestion de session SMF, et le premier paquet est un paquet Ethernet de liaison montante.

6. Procédé selon l'une quelconque des revendications 1 ou 2, dans lequel le premier dispositif est un élément de réseau de gestion de session SMF, le second dispositif est un équipement utilisateur UE, et le premier paquet est un paquet Ethernet de liaison descendante.

7. Dispositif, comprenant des unités respectives (1301, 1302, 1303, 1304) configurées pour réaliser le procédé selon l'une quelconque des revendications 1 à 6.

8. Support de stockage informatique, stockant des instructions, dans lequel lorsque les instructions sont exécutées sur un ordinateur, l'ordinateur est activé pour réaliser le procédé selon l'une quelconque des revendications 1 à 6.
